# EUROPEAN PATENT SPECIFICATION

(11) **EP 3 480 243 B1**
(45) Date of publication and mention of the grant of the patent: **28.09.2022**
(21) Application number: 17819683.8
(22) Date of filing: 12.05.2017
(51) Int. Cl.: C08J 9/18, C08J 9/228, C08L 75/04, C08J 9/12, C08J 9/232

(54) **THERMOPLASTIC POLYURETHANE FOAM PARTICLE MOLDED ARTICLE AND METHOD FOR PRODUCING SAME, AND THERMOPLASTIC POLYURETHANE FOAM PARTICLES**
THERMOPLASTISCHER POLYURETHANSCHAUMFORMARTIKEL UND VERFAHREN ZUR HERSTELLUNG DAVON SOWIE THERMOPLASTISCHE POLYURETHANSCHAUMPARTIKEL
ARTICLE MOULÉ EN PARTICULES DE MOUSSE DE POLYURÉTHANNE THERMOPLASTIQUE ET PROCÉDÉ DE PRODUCTION DUDIT ARTICLE MOULÉ EN PARTICULES DE MOUSSE DE POLYURÉTHANNE THERMOPLASTIQUE, ET PARTICULES DE MOUSSE DE POLYURÉTHANNE THERMOPLASTIQUE

(30) Priority: 29.06.2016 JP 2016128887; 29.08.2016 JP 2016167088; 13.09.2016 JP 2016178329
(43) Date of publication of application: 08.05.2019
(73) Proprietor: JSP Corporation, Chiyoda-ku, Tokyo 100-0005 (JP)
(72) Inventor: HAYASHI, Tatsuya, Yokkaichi-shi Mie 510-0881 (JP); KOSHITA, Nobumasa, Yokkaichi-shi Mie 510-0881 (JP); OIKAWA, Masaharu, Yokkaichi-shi Mie 510-0881 (JP)
(74) Representative: Gille Hrabal Partnerschaftsgesellschaft mbB Patentanwälte
(86) International application number: PCT/JP2017/018106
(87) International publication number: WO 2018/003316

(56) References cited:
- WO-A1-2015/169164
- JP-A- H08 113 664
- JP-A- 2002 371 154
- JP-A- 2007 091 840
- JP-A- 2007 231 068
- JP-A- 2009 286 969
- JP-A- 2014 062 213
- JP-A- 2015 525 822
- US-A1- 2012 329 892
- US-A1- 2014 227 505

## Description

### TECHNICAL FIELD

The present invention relates to an expanded thermoplastic polyurethane (hereinafter sometimes abbreviated as "TPU") beads molded article and a method for producing same, and to expanded thermoplastic polyurethane beads.

### BACKGROUND ART

TPU that is one kind of thermoplastic elastomers is used in a variety of fields, such as cushioning materials, vibration-damping materials, sports goods, and automobile members, by utilizing its excellent wear resistance, cold resistance, and repulsion elasticity and high mechanical characteristics.

By expanding this TPU, it is possible to impart lightness in weight, flexibility, and thermal insulation properties while keeping excellent characteristics which the TPU itself has, such as wear resistance and repulsion elasticity, and therefore, more application enlargement in sports goods, automobile components, and so on is expected.

It is possible to produce an expanded molded article of TPU by a method, such as extrusion expansion, press expansion, and injection expansion. However, in particular, according to an in-mold molding method of subjecting expanded TPU beads to in-mold molding to obtain an expanded molded article, a degree of freedom of shape is high, and an expanded molded article having a high closed cell ratio is obtainable as compared with other molding methods, and therefore, it is possible to achieve improvement in repulsion properties and more weight reduction. In recent years, in expanded TPU beads molded articles, the application thereof is being spread particularly in the field of sports goods.

The expanded TPU beads molded articles are described in, for example, PTLs 1 to 4.

In recent years, for the purpose of diversity in designs, not only molded articles having a color originated from an expanded material but also colored expanded TPU beads molded articles are demanded. As expanded beads for obtaining such an expanded beads molded article, for example, PTL 5 discloses expanded thermoplastic polyurethane beads having a pigment contained therein. PTL 6 discloses a bead foam compression molding method using in situ steam generation to obtain a low density foamed article product having a density of from about 0.1 to about 0.45 g/cm³.

### CITATION LIST

### PATENT LITERATURE

PTL 1: JP H8-113664 A
PTL 2: US 2012/0329892 A
PTL 3: JP 2014-62213 A
PTL 4: WO 2015/169164 A
PTL 5: CN 103951965 A (and WO2015/169164 A1 and US2016/311993A1)
PTL 6: US 2014/227505 A1

### SUMMARY OF INVENTION

### TECHNICAL PROBLEM

However, when the conventional colored expanded TPU beads are subjected to in-mold molding, there was involved such an inconvenience that the resulting expanded beads molded article does not have uniformity in color tone, namely color unevenness is liable to be generated.

In order to solve the foregoing problem, the present invention has been made.

An object of a first invention is to provide an expanded TPU beads molded article that is free from color unevenness and good in color developing properties and a method for producing same.

An object of a second invention is to provide expanded beads capable of providing a molded article which does not generate color unevenness and has uniformity in color tone.

### SOLUTION TO PROBLEM

The present inventors made extensive and intensive investigations. As a result, it has been found that by adopting the following constitutions, the foregoing problem can be solved, thereby leading to accomplishment of the present invention.

The present invention is concerned with the following first invention and second invention.

### <First Invention>

(1) An expanded thermoplastic polyurethane beads molded article that is an in-mold molded article of expanded thermoplastic polyurethane beads containing a colorant, wherein an average surface cell wall thickness of the molded article is 20 µm or more.
(2) The expanded thermoplastic polyurethane beads molded article as set forth in the above (1), wherein a variation coefficient of surface cell wall thickness of the molded article is 0.8 or less.
(3) A method for producing an expanded thermoplastic polyurethane beads molded article having an average surface cell wall thickness of 20 µm or more, including
   (I) subjecting expanded thermoplastic polyurethane beads containing a colorant to in-mold molding to produce an expanded beads molded article, wherein the average surface cell wall thickness of the expanded beads is less than 15 µm, and at the time of in-mold molding, the expanded beads are heated with steam having a temperature of higher than ((melting temperature Tm) - 25)°C and not higher than the (melting temperature Tm)°C of thermoplastic polyurethane constituting the expanded beads; or
   (II) subjecting expanded thermoplastic polyurethane beads containing a colorant to in-mold molding to produce an expanded beads molded article, wherein the average surface cell wall thickness of the expanded beads is 15 µm or more.
(4) The method for producing an expanded thermoplastic polyurethane beads molded article as set forth in the above (3), wherein in (I) the average cell diameter of the expanded beads is 50 µm or more and less than 150 µm.
(5) The method for producing an expanded thermoplastic polyurethane beads molded article as set forth in the above (3) or (4), wherein in (I) the melt flow rate at 190°C under a load of 10 kg of the expanded beads is from 5 to 40 g/10 min.
(6) The method for producing an expanded thermoplastic polyurethane beads molded article as set forth in the above (3), wherein in (II) the average cell diameter of the expanded beads is 150 µm or more.
(7) The method as set forth in the above (3) to (6), wherein in (II) the expanded thermoplastic polyurethane beads containing a colorant are characterized by having an apparent density of from 80 to 300 kg/m³, an average cell diameter of from 150 to 400 µm, and an average surface cell wall thickness of 15 µm or more. <Second Invention>
(8) Expanded thermoplastic polyurethane beads that are expanded thermoplastic polyurethane beads containing a colorant, being characterized by an apparent density of from 80 to 300 kg/m³, an average cell diameter of from 100 to 400 µm, and an average surface cell wall thickness of 15 µm or more.
(9) The expanded thermoplastic polyurethane beads as set forth in the above (8), wherein the average cell diameter of the expanded beads is 150 µm or more and 300 µm or less.
(10) The expanded thermoplastic polyurethane beads as set forth in the above (8) or (9), wherein the average bead diameter of the expanded beads is from 1 to 8 mm.
(11) The expanded thermoplastic polyurethane beads as set forth in any one of the above (8) to (10), wherein the melt flow rate at 190°C under a load of 10 kg of the expanded beads is from 5 to 40 g/10 min.
(12) The expanded thermoplastic polyurethane beads as set forth in any one of the above (8) to (11), wherein the colorant is a color pigment, and the content of the color pigment in the expanded beads is from 0.1 to 5% by mass.
(13) The expanded thermoplastic polyurethane beads as set forth in any one of the above (8) to (12), wherein the melt flow rate at 190°C under a load of 10 kg of the expanded beads is from 10 to 40 g/10 min.
(14) The expanded thermoplastic polyurethane beads as set forth in any one of the above (8) to (13), wherein the thermoplastic polyurethane constituting the expanded beads is an ether-based thermoplastic polyurethane.
(15) The expanded thermoplastic polyurethane beads as set forth in the above (14), wherein the melt flow rate at 190°C under a load of 10 kg of the expanded beads is from 20 to 35 g/10 min.

### ADVANTAGEOUS EFFECTS OF INVENTION

### <First Invention>

The expanded TPU beads molded article of the first invention is high in uniformity of color and good in color developing properties. This expanded TPU beads molded article is used for shoe soles, pad materials for sports goods, cushioning materials for automobile, furniture, or daily necessaries, and so on.

### <Second Invention>

A molded article resulting from in-mold molding of the expanded beads of the second invention is suppressed in color unevenness and has uniformity in color tone.

### BRIEF DESCRIPTION OF DRAWINGS

Fig. 1 is a schematic view showing a state of the surface of an expanded beads molded article.
Fig. 2 is a cross-sectional photograph of a molded article obtained in Example 1-1.
Fig. 3 is a cross-sectional photograph of a molded article obtained in Comparative Example 1-1.
Fig. 4 is a cross-sectional photograph of a molded article obtained in Example 1-2.
Fig. 5 is a cross-sectional photograph of a molded article obtained in Comparative Example 1-2.

### DESCRIPTION OF EMBODIMENTS

### [Thermoplastic Polyurethane (TPU)]

TPU constituting the expanded TPU beads which are used in the present invention has a structure in which a hard segment in which a diisocyanate and a chain extender (a diol compound, such as a short-chain glycol) are polymerized via a urethane bond and a soft segment containing a polymer chain containing an ether group, an ester group, a carbonate group and so on, are mutually bonded to each other. Then, in a normal temperature region, the soft segment reveals elasticity, and the hard segment acts as a physical crosslinking point to exhibit elasticity close to rubber.

In the TPU, the type of a soft segment largely influences characteristics of TPU. The ester-based TPU is excellent especially in mechanical strength, heat resistance, and so on, whereas the ether-based TPU is excellent especially in cold resistance, hydrolysis resistance, fungus resistance, and so on. In consequence, the kind of the TPU to be used can be properly selected according to the characteristics required for the expanded TPU beads molded article.

A constitutional element of the aforementioned TPU is not particularly limited, and it can be properly selected according to physical properties required for the resulting expanded TPU beads molded article. All of the aforementioned ether-based TPU and ester-based TPU, and a complex type of the both are applicable.

The ester-based TPU is preferable in being excellent in mechanical strength, heat resistance, and ultraviolet resistance, and the ether-based TPU is preferable in terms of high hydrolysis resistance, cold resistance, antibacterial properties, and small temperature dependency of mechanical properties in a low-temperature region.

A type A durometer hardness of TPU is preferably 80 to 95, more preferably 85 to 95, and still more preferably 85 to 90. The type A durometer hardness means a durometer hardness measured using a type A durometer hardness meter (manufactured by Kobunshi Keiki Co., Ltd.) or the like in conformity with ASTM D2240.

### [Colorant]

As the colorant, inorganic or organic pigments or dyes can be used.

Examples of the organic pigment include a monoazo-based pigment, a condensed azo-based pigment, an anthraquinone-based pigment, an isoindolinone-based pigment, a heterocyclic pigment, a perinone-based pigment, a quinacridone-based pigment, a perylene-based pigment, a thioindigo-based pigment, a dioxazine-based pigment, a phthalocyanine-based pigment, a nitroso-based pigment, a phthalocyanine pigment, and an organic fluorescent pigment.

Examples of the inorganic pigment include titanium oxide, carbon black, Titan Yellow, iron oxide, ultramarine blue, cobalt blue, a calcined pigment, a metallic pigment, mica, a pearl pigment, zinc white, precipitated silica, and cadmium red.

Examples of the dye include an anthraquinone-based dye, a heterocyclic dye, a perinone-based dye, a basic dye, an acidic dye, and a mordant dye.

Among these colorants, from the viewpoint of weather resistance, an organic pigment or an inorganic pigment is preferably used.

The colorant may be used alone or may be used in admixture of two or more thereof.

### <First Invention>

### [Expanded TPU Beads Molded Article]

The expanded TPU beads molded article of the first invention (hereinafter also referred to simply as "expanded beads molded article") is an in-mold molded article of expanded TPU beads (hereinafter also referred to simply as "expanded beads") containing a colorant, wherein the average surface cell wall thickness of the molded article is 20 µm or more. Though the amount of the colorant which is contained in the expanded beads is not particularly limited, it is preferably 0.01 to 10 parts by mass based on 100 parts by mass of TPU.

By regulating the average surface cell wall thickness of the expanded beads molded article to 20 µm or more, an expanded beads molded article that is free from color unevenness and good in color developing properties is provided. From such a viewpoint, the average surface cell wall thickness of the expanded beads molded article is preferably 25 µm or more.

In the expanded beads molded article of the first invention, a variation coefficient of surface cell wall thickness thereof is preferably 0.8 or less, and more preferably 0.7 or less.

This is because when the variation coefficient of surface cell wall thickness is 0.8 or less, an expanded beads molded article that is further free from a shade of color is provided, and the shade of color to be caused due to a site disappears, whereby a more uniform appearance is revealed.

In the expanded beads molded article of the first invention, an average cell diameter thereof is preferably more than 50 µm. This is because when this average cell diameter is more than 50 µm, in particular, the color developing properties are satisfactory. From such a viewpoint, the average cell diameter of the expanded beads molded article is more preferably 100 µm or more. Even when the average cell diameter of the expanded beads molded article is 50 µm or less, so far as the average surface cell wall thickness is 20 µm or more, good color developing properties can be obtained.

In this specification, the average cell diameter of the expanded beads molded article is a value measured in the following manner in conformity with ASTM D3576-77. First of all, the expanded beads molded article is cut to form a cut surface. On one cut surface, the number of cells crossing a line segment of 30 mm drawn in an arbitrary direction is measured, and the length (30 mm) of the line segment is divided by the number of cells crossing the line segment to determine an average chord length of the cells, which is further divided by 0.616, thereby determining the average cell diameter of the expanded beads molded article. In addition, on the cut surface, a length (surface cell wall thickness) of from the outermost surface of the expanded beads molded article to a bubble located in the outermost part of the molded article is measured in ten or more spots, and those values are arithmetically averaged, thereby determining the average surface cell wall thickness of the expanded beads molded article. In addition, a standard deviation of the surface cell wall thickness is determined, and the standard deviation is divided by the average surface cell wall thickness of the expanded beads molded article, thereby determining a variation coefficient of surface cell wall thickness. The standard deviation is defined as a square root of unbiased variance.

An apparent density of the expanded beads molded article of the first invention is preferably 50 to 500 kg/m³, and more preferably 100 to 300 kg/m³. When the apparent density falls within the aforementioned range, a molded article in which lightness in weight and repulsion properties are made compatible with each other is provided.

The apparent density of the expanded beads molded article is a value determined by dividing a weight of the expanded beads molded article by an apparent volume of the molded article. The apparent volume of the expanded beads molded article can be determined by the water immersion method.

### [Production Method of Expanded TPU Beads Molded Article]

In the case of blending the TPU with a colorant to foamed and expand it, the cells are liable to be refined, and the surface cell wall thickness of the expanded bead is liable to be thinned due to viscosity characteristics at the time of melting of TPU. When the surface cell wall thickness of the expanded bead is thin, and the cells are refined, the expanded beads are whitened, and the color developing properties are lowered, thereby causing paleness in color. On in-mold molding the expanded beads, the expanded beads are pressed in a heating state against the mold surface. The TPU is soft, and therefore, a central portion of the surface of the expanded bead is liable to be excessively pressed against the mold surface. The surface of this pressed portion is melted, and the cells in the surface layer vanish. As a result, the surface cell wall (molded skin) thickness becomes thick, thereby causing deepening in color. On the other hand, the vicinity of an interface between the adjacent expanded beads is hardly pressed against the mold surface, and the original cell state is maintained, and therefore, the pale-colored state is kept. As a result, it has been noted that the resulting expanded beads molded article causes color unevenness such that a deep-colored portion and a pale-colored portion are existent.

Even in the case of undergoing in-mold molding using the expanded beads having a thin surface cell wall thickness, it has been noted that by increasing a maximum heating temperature at the time of in-mold molding to a fixed temperature or higher, the cells in not only a contact portion of the expanded beads with the mold surface but also the surface layer of a non-contact portion of the expanded beads with the mold surface is allowed to vanish, whereby the average surface cell wall thickness of the expanded beads molded article can be regulated to a fixed value or more. As a result, it has been noted that the color developing properties and uniformity of color of the resulting expanded beads molded article can be enhanced.

Meanwhile, expanded beads having a thick surface cell wall thickness can also be obtained by regulating the kind of a cell nucleating agent and its addition amount, regulating the expansion temperature, or regulating the expansion atmosphere. It has been noted that even by in-mold molding expanded beads having a surface cell wall thickness of a fixed value or more, an expanded beads molded article with excellent color developing properties and uniformity of color can be obtained.

The present inventors have accomplished the following production methods (I) and (II) of an expanded TPU beads molded article on a basis of such findings.

(I) A production method of a first expanded TPU beads molded article of the first invention is a method including subjecting expanded TPU beads containing a colorant to in-mold molding to produce an expanded beads molded article, wherein an average surface cell wall thickness of the expanded beads is less than 15 µm, and at the time of in-mold molding, the expanded beads are heated with steam having a temperature of higher than ((melting temperature Tm) - 25)°C and not higher than the (melting temperature Tm)°C of thermoplastic polyurethane constituting the expanded beads, thereby regulating an average surface cell wall thickness of the expanded beads molded article to 20 µm or more.

According to this method, even in expanded beads having an average surface cell wall thickness of less than 15 µm, by undergoing in-mold molding such that the average surface cell wall thickness of the expanded beads molded article is 20 µm or more, an expanded beads molded article with excellent color developing properties and uniformity of color can be obtained.

In the case where the heating temperature at the time of in-mold molding is excessively low, though it is possible to thoroughly mutually fuse the expanded beads, the surface cell wall thickness in the vicinity of an interface between the expanded beads cannot be made thoroughly thick, and an expanded beads molded article with excellent color developing properties and uniformity of color is not obtainable. From such a viewpoint, the heating temperature at the time of in-mold molding is preferably ((melting temperature Tm) - 23)°C or higher. On the other hand, when the heating temperature is excessively high, the expanded beads molded article is remarkably shrunk, so that a good expanded beads molded article is not obtainable, From such a viewpoint, the heating temperature is preferably not higher than ((melting temperature Tm) - 10)°C.

In the in-mold molding method, the expanded beads molded article is obtained by introducing expanded beads into a mold, heating the expanded beads with steam and fusion bonding them, and cooling the resultant, followed by demolding. In general, in heating at the time of in-mold molding, the heating temperature is controlled by a pressure of the steam.

In particular, though expanded beads having an average cell diameter of less than 150 µm are liable to become pale in color, even such expanded beads are able to provide a molded article with excellent color developing properties and uniformity of color by the production method (I). Taking into consideration in-mold moldability, a lower limit of the average cell diameter is preferably about 50 µm, and more preferably 100 µm.

(II) A second production method of an expanded TPU beads molded article of the first invention is a method for producing an expanded beads molded article including subjecting expanded TPU beads containing a colorant to in-mold molding to produce an expanded beads molded article, wherein an average surface cell wall thickness of the expanded beads is 15 µm or more.

By in-mold molding expanded beads having an average surface cell wall thickness of 15 µm or more, an expanded beads molded article with excellent color developing properties and uniformity of color can be obtained. On the other hand, though an upper limit thereof is not particularly limited from the viewpoint of color developing properties and uniformity of color of the molded article, when the in-mold moldability is taken into consideration, the average surface cell wall thickness is preferably 50 µm or less, more preferably 40 µm or less, and still more preferably 30 µm or less.

An average cell diameter of the expanded beads is preferably 150 µm or more. When the average cell diameter of the expanded beads is 150 µm or more, a molded article that is excellent especially in color developing properties and uniformity of color can be obtained. From such a viewpoint, the average cell diameter of the expanded beads is more preferably 165 µm or more. On the other hand, though an upper limit thereof is not particularly limited from the viewpoint of color developing properties and uniformity of color of the molded article, when the in-mold moldability and physical properties of the resulting expanded beads molded article, such as repulsion elasticity, are taken into consideration, the average cell diameter is preferably 400 µm or less, and more preferably 300 µm or less.

The melting temperature Tm of the thermoplastic polyurethane constituting the expanded beads is preferably 140 to 190°C. When the melting temperature falls within the aforementioned range, expanded beads that are good in secondary expandability and fusion bonding properties are provided. From the aforementioned viewpoint, the lower limit of the melting temperature is more preferably 150°C, still more preferably 155°C, and especially preferably 160°C. On the other hand, the upper limit thereof is more preferably 185°C, still more preferably 180°C, and especially preferably 170°C.

The melting temperature is a value determined in the following manner. A value determined as a peak top temperature of melting peak of a DSC curve obtained at a heating rate of 10°C/min by the heat flux differential scanning calorimetry on a basis of JIS K7121-1987 is defined as the melting temperature. That is, as for conditioning a test piece, "the case of performing a fixed heat treatment and then measuring a melting temperature" (all of a heating rate and a cooling rate in conditioning of a test piece are set to 10°C/min; however, in order to completely melt a hard segment of TPU, the test piece is heated for melting to a temperature of higher by about 90°C than that at the time of termination of melting peak) is adopted. In the case where the DSC curve has plural melting peaks, a peak top temperature of the melting peak having a highest temperature is adopted as the melting temperature.

A melt flow rate (MFR) at a temperature of 190°C under a load of 10 kg of the expanded beads is preferably 40 g/10 min or less. As in the production method (I), when the in-mold molding is performed by heating the expanded beads at a high temperature, remarkable shrinkage, deformation, and so-called terrible sink are liable to be generated in the expanded beads molded article after demolding depending upon the shape of the expanded beads molded article or the like. However, by using expanded beads having an MFR of 40 g/10 min or less, the terrible sink can be effectively suppressed. From such a viewpoint, the MFR is more preferably 35 g/10 min or less, and still more preferably 30 g/10 min or less. On the other hand, the MFR is preferably 5 g/10 min or more. By using expanded beads having an MFR of 5 g/10 min or more, the expanded beads are thoroughly secondarily expanded at the time of in-mold molding, whereby an expanded beads molded article that is less in voids on the surface and good in the surface state can be obtained. From such a viewpoint, the MFR is more preferably 10 g/10 min or more, and still more preferably 20 g/10 min or more.

In this specification, the MFR is a value measured under a condition at a temperature of 190°C under a load of 10 kg on a basis of JIS K7210-2:2014. The water content of a measurement sample is controlled to 500 ppm or less.

In this specification, the average cell diameter of the expanded beads is a value measured in the following manner in conformity with ASTM D3576-77. The expanded bead is bisected so as to pass through the center of the expanded bead. An enlarged photograph of one cross section of the respective cut expanded bead is taken, and four line segments are drawn equiangularly from the outermost surface of the expanded bead in the enlarged photograph so as to pass through the center thereof until reaching the outermost surface on the opposite side. The number of cells crossing each of the line segments is measured, respectively, and a total length of the four line segments is divided by the total number of cells crossing the line segments to determine an average chord length of the cells, which is further divided by 0.616, thereby determining the average cell diameter of the expanded beads. In addition, on the line segment, a length (surface cell wall thickness) of from the outermost surface of the expanded bead to a bubble located in the outermost part of the expanded bead is measured, and those values are arithmetically averaged, thereby determining the average surface cell wall thickness of the expanded beads.

In the expanded beads which are used in the first invention, an apparent density thereof is preferably 50 to 500 kg/m³. From the viewpoint of in-mold moldability, the apparent density is more preferably 80 kg/m³ or more, still more preferably 100 kg/m³ or more, and especially preferably 120 kg/m³ or more. Similarly, the apparent density is more preferably 300 kg/m³ or less, still more preferably 250 kg/m³ or less, and especially preferably 200 kg/m³ or less.

In this specification, the apparent density of the expanded beads is a value determined by dividing a weight of the expanded beads by a volume of the expanded beads. The volume of the expanded beads can be determined by the water immersion method.

An average bead diameter of the expanded beads which are used in the first invention is preferably 1 to 10 mm. When the average bead diameter is 1 mm or more, a sufficient expansion ratio is obtained, and there is no concern about lowering of internal fusion bonding properties of the molded article. In addition, when the average bead diameter is 10 mm or less, expanded beads in which an expansion density in a single bead is uniform are readily provided, and an expanded beads molded article having desired physical properties, such as flexibility and repulsion properties, is obtained, and filling into a mold at the time of molding is easy. From such a viewpoint, the lower limit of the average bead diameter of the expanded beads is more preferably 1.5 mm, and still more preferably 2 mm. On the other hand, the upper limit thereof is more preferably 8 mm. The average bead diameter of the expanded beads as referred to herein means a diameter of a virtual true sphere having a volume the same as an average volume per expanded bead. The average volume per expanded bead can be determined by the water immersion method.

A mass of the aforementioned expanded bead is preferably 0.5 to 30 mg. When the mass is 0.5 mg or more, a sufficient expansion ratio is obtained, and there is no concern about lowering of internal fusion bonding properties of the molded article. In addition, when the mass is 30 mg or less, expanded beads in which an expansion density in a single bead is uniform are readily provided, and therefore, an expanded beads molded article having desired physical properties, such as flexibility and repulsion properties, is readily obtained.

### [Production Method of Expanded TPU Beads]

Though the production method of expanded TPU beads in the first invention is not particularly limited, examples of the production method include a direct expansion method, an impregnation expansion method, and an extrusion expansion method.

The direct expansion method is a method in which the TPU beads containing a colorant are dispersed in a dispersion medium within a closed vessel; a blowing agent is impregnated in the TPU beads under pressure and preferably further under heating; and the aforementioned TPU beads containing the blowing agent are released together with the dispersion medium under a temperature condition suitable for the expansion from the closed vessel under a low pressure and expanded, thereby obtaining the expanded TPU beads.

The impregnation expansion method is a method in which a blowing agent is impregnated in the TPU beads within a closed vessel and taken out without being expanded from the closed vessel to form expandable beads; or the TPU and a blowing agent are kneaded within an extruder, the kneaded material is extruded without being expanded into water or the like from a die equipped in the extruder, and the resultant is cut in a granular state to form expandable beads; and the obtained expandable beads are heated and expanded, thereby obtaining the expanded TPU beads.

The extrusion expansion method is a method in which the TPU and a blowing agent are kneaded within an extruder, the kneaded material is extruded from a die and expanded, and the resultant is cut in a granular state, thereby obtaining the expanded TPU beads.

In the first invention, as the blowing agent on producing the expanded beads, an organic physical blowing agent, such as butane and pentane; an inorganic physical blowing agent, such as nitrogen and carbon dioxide; and a chemical blowing agent, such as sodium bicarbonate-citric acid, can be used. In addition, an encapsulated resin or glass fine particle (microcapsule) having an organic physical blowing agent included therein can be used. Among those, carbon dioxide is preferred because of excellent expandability of TPU.

In the first invention, above all, it is preferred to produce the expanded TPU beads by the direct expansion method.

Steps of the direct expansion method are hereunder described.

### (1) Preparation Step of TPU Beads

TPU is melted and kneaded in an extruder and then extruded from a die, and the resultant is cut in a granular state to obtain TPU beads. On this occasion, as the cutting method, any of strand cutting, underwater cutting, and hot cutting are adoptable. It is preferred to add additives, such as a cell controlling agent, a lubricant, an antioxidant, a UV absorbing agent, and a colorant, in this step.

An MFR at 190°C under a load of 10 kg of the raw material TPU to be fed into the extruder is preferably 0.1 to 30 g/10 min, and more preferably 1 to 20 g/10 min. The TPU is liable to be thermally decomposed or hydrolyzed within the extruder, and the MFR occasionally rises after extrusion. When the MFR of the raw material TPU is 0.1 to 30 g/10 min, it is easy to control the MFR of the expanded beads to 5 to 40 g/10 min.

The TPU beads can be blended with, in addition to the colorant, various additives which are usually used, such as an antistatic agent, an electrical conductivity imparting agent, a lubricant, an antioxidant, a UV absorbing agent, a flame retardant, a metal-deactivator, a crystal nucleating agent, and a filler, as the need arises. Though the addition amount of such an additive of every kind varies with the application purpose of the expanded beads molded article, it is preferably 25 parts by mass or less, more preferably 15 parts by mass or less, still more preferably 10 parts by mass or less, and especially preferably 5 parts by mass or less based on 100 parts by mass of the raw material TPU.

### (2) Expansion Step

The TPU beads are dispersed in a dispersion medium, such as water, within a closed vessel. At this time, a dispersant or a dispersing aid may be used such that the TPU beads are uniformly dispersed in the dispersion medium.

Next, a blowing agent is impregnated in the TPU beads within the closed vessel.

It is preferred to use a physical blowing agent as the blowing agent. As the physical blowing agent, examples of an organic physical blowing agent include hydrocarbons, such as propane, butane, pentane, hexane, heptane, cyclopentane, and cyclohexane; halogenated hydrocarbons, such as, chlorofluoromethane, trifluoromethane, 1,1-difluoroethane, 1,1,1,2-tetrafluoroethane, methyl chloride, ethyl chloride, and methylene chloride; and dialkyl ethers, such as dimethyl ether, diethyl ether, and methyl ethyl ether. In addition, examples of an inorganic physical blowing agent include carbon dioxide, nitrogen, argon, air, and water.

Though the use amount of the blowing agent is properly set taking into consideration the apparent density of the target expanded beads, the kind of TPU, the kind of the blowing agent, and so on, in general, it is preferably 0.5 to 30 parts by mass based on 100 parts by mass of the TPU beads.

From the viewpoint of thoroughly impregnating the blowing agent in the TPU beads within a short period of time, it is preferred that the impregnation of the physical blowing agent in the TPU beads is performed by heating under pressure.

It is preferred to regulate a temperature (impregnation temperature) of the contents within the closed vessel on impregnating the blowing agent in the TPU beads to (Tm - 80°C) or higher relative to the melting temperature Tm of the TPU beads.

It is preferred that the physical blowing agent is fed under pressure into the closed vessel such that the pressure within the closed vessel is 0.5 MPa (G: gauge pressure) or more, namely an impregnation pressure is 0.5 MPa (G) or more, and more preferably 1.0 MPa (G) or more. In addition, from the viewpoint of pressure resistance of the closed vessel, the impregnation pressure is regulated to preferably 10 MPa (G) or less, and more preferably 8.0 MPa (G) or less.

Though an impregnation time of the blowing agent is properly set according to the impregnation temperature, the impregnation pressure, the kind or mass of TPU, and so on, in order to thoroughly impregnate the physical blowing agent in the TPU beads, it is preferably 0.05 hour or more, and more preferably 0.1 hour or more. On the other hand, from the viewpoint of productivity, an upper limit thereof is regulated to preferably 3 hours or less, and more preferably 1 hour or less.

In the light of the above, the blowing agent is impregnated in the TPU beads, whereby the TPU beads (expandable beads) containing the blowing agent is formed.

When the aforementioned expandable beads are released together with the dispersion medium under a lower pressure than the pressure within the closed vessel and expanded, the expanded TPU beads can be obtained.

On releasing the expandable beads under a lower pressure, a temperature of the contents within the closed vessel (expansion temperature) is regulated to preferably (Tm - 60°C) or higher, more preferably from (Tm - 50°C) to (Tm - 10°C), and still more preferably from (Tm - 40°C) to (Tm - 20°C) relative to the melting temperature Tm of the TPU beads.

When the expandable beads are expanded in such a temperature range, expanded beads having a good cell structure can be easily obtained.

On releasing the expandable beads from the closed vessel, in order to minimize scattering in the apparent density or scattering in the cell diameter of the resulting expanded beads, it is preferred that the pressure within the released vessel is kept constant or increased step-by-step by applying a back pressure with a gas, such as carbon dioxide and air.

In general, when the TPU containing a color pigment is expanded in the aforementioned range of apparent density, the cells of the resulting expanded beads are liable to become fine, and the surface cell wall thickness tends to become thin. By adopting a production condition as mentioned later, specifically by regulating the kind and blending amount of a cell controlling agent, the kind and blending amount (impregnation pressure) of a blowing agent, and the expansion temperature, occurrence of excessive refinement of the cells and excessive thinning of the surface cell wall thickness can be suppressed. Such a condition is hereunder described.

The blending amount of the cell controlling agent in the TPU beads is regulated to preferably 0.2 part by mass or less, and more preferably 0.1 part by mass or less based on 100 parts by mass of TPU. On the other hand, when the blending amount of the cell controlling agent is excessively small, the cell diameter is liable to become non-uniform, and therefore, the blending amount of the cell controlling agent is regulated to preferably 0.005 part by mass or more, and more preferably 0.01 part by mass or more. In addition, in the case of using water as the dispersion medium, from the viewpoint of suppressing scattering in the cells of the expanded beads, it is preferred to use, as the cell controlling agent, an inorganic powder having relatively low water absorbency, such as talc and calcium carbonate, with talc being especially preferred. In the case of using talc as the cell controlling agent, it is preferred to use talc having a 50% volume average particle diameter (d50) of 0.5 to 30 µm, and the d50 of talc is more preferably 1 to 15 µm.

In order to suppress the occurrence of refinement of the cells of the expanded beads, it is preferred to use carbon dioxide as the blowing agent. In addition, by using carbon dioxide as the blowing agent, in the production equipment, an explosion-proof countermeasure as in a conventional case of using an inflammable hydrocarbon, such as butane, is not required, and therefore, it is easy to secure safety, and the equipment investment costs can be reduced.

Though it is preferred to use carbon dioxide as the blowing agent, it can also be jointly used with other physical blowing agent or chemical blowing agent. In this case, a blending ratio of carbon dioxide in the blowing agent is preferably 50% by mass or more, more preferably 70% by mass or more, and still more preferably 90% by mass or more.

In the case of using carbon dioxide as the blowing agent, from the viewpoint of not excessively refining the cell diameter of the resulting expanded beads, the impregnation pressure is regulated to preferably 7.0 MPa (G) or less, more preferably 5.0 MPa (G) or less, and still more preferably 4.0 MPa (G) or less.

The pressure within the closed vessel at the time of expansion, namely the expansion pressure is regulated to preferably lower than 3.5 MPa (G), and more preferably 3.2 MPa (G) or less. By allowing the expansion pressure to fall within the aforementioned range, it becomes easy to regulate the average cell diameter and the average surface cell wall thickness of the resulting expanded beads within the aforementioned ranges, respectively. On the other hand, from the viewpoint of uniformity of the cells of the expanded beads, the expansion pressure is regulated to preferably higher than 2.5 MPa (G), and more preferably 2.8 MPa (G) or more.

In the case where after expansion, the expanded beads shrink to cause a reduction of the volume thereof, the expanded beads are subjected to a pressurization treatment with air, and the volume can be then recovered under atmospheric pressure. Specifically, it is preferred that the resulting expanded beads are put into a closed vessel and subjected to a pressurization treatment with compressed air of 0.05 to 0.6 MPa (G) at a temperature of 0 to 60°C for 1 to 24 hours; the pressure of the closed vessel is then released; and the resulting expanded beads are allowed to stand under atmospheric pressure at 30 to 80°C for 12 to 72 hours. According to this operation, the volume of the shrunk expanded beads can be recovered.

### <Second Invention>

The expanded thermoplastic polyurethane beads of the second invention are expanded thermoplastic polyurethane beads containing a colorant, wherein an apparent density of the expanded beads is 80 to 300 kg/m³, an average cell diameter of the expanded beads is 100 to 400 µm, and an average surface cell wall thickness of the expanded beads is 15 µm or more. The expanded beads can be obtained by expanding the TPU beads containing a colorant.

The expanded beads of the second invention are constituted of the aforementioned TPU. However, other polymer, such as a polyolefin-based resin, a polystyrene-based resin, and, a styrene-based elastomer, can also be mixed with the aforementioned TPU and used according to the application and object of the expanded beads molded article within a range where the object of the second invention is not impaired. The use amount of such other polymer is preferably 30 parts by mass or less, more preferably 20 parts by mass or less, and still more preferably 10 parts by mass or less based on 100 parts by mass of TPU. It is especially preferred that the expanded beads do not contain other polymer than TPU.

In TPU constituting the aforementioned expanded beads, its melting temperature is preferably 140 to 190°C. When the melting temperature of TPU falls within the aforementioned range, expanded beads that are more excellent in in-mold moldability are provided. From the aforementioned viewpoint, the lower limit of the melting temperature is more preferably 150°C, still more preferably 155°C, and especially preferably 160°C. On the other hand, the upper limit thereof is more preferably 185°C, still more preferably 180°C, and especially preferably 170°C.

The aforementioned melting temperature is a value determined in the following manner. A value determined as a peak top temperature of melting peak of a DSC curve obtained at a heating rate of 10°C/min by the heat flux differential scanning calorimetry on a basis of JIS K7121-1987 is defined as the melting temperature. That is, as for conditioning a test piece, "the case of performing a fixed heat treatment and then measuring a melting temperature" (all of a heating rate and a cooling rate in conditioning of a test piece are set to 10°C/min; however, in order to completely melt a hard segment of TPU, the test piece is heated for melting to a temperature of higher by about 90°C than that at the time of termination of melting peak) is adopted. In the case where the DSC curve has plural melting peaks, a peak top temperature of the melting peak having a highest temperature is adopted as the melting temperature.

A melt flow rate (MFR) at 190°C under a load of 10 kg of the aforementioned expanded beads is preferably 5 to 40 g/10 min. By regulating the MFR to 5 g/10 min or more, the secondary expandability of the expanded beads at the time of in-mold molding is not worsened, and a molded article having a smooth surface is obtained. By regulating the MFR to 40 g/10 min or less, the fusion bonding properties of the expanded beads become sufficient, increase of the heating temperature at the time of in-mold molding for the purpose of enhancing the fusion bonding properties becomes unnecessary, and shrinkage or deformation (terrible sink) of the expanded beads molded article to be caused due to the increase of the heating temperature at the time of in-mold molding can be avoided.

When conventional expanded TPU beads containing a color pigment are subjected to in-mold molding, the fusion bonding properties of the expanded beads are liable to become insufficient. In order to contemplate to subject the expanded beads to fusion bonding, when the heating temperature at the time of molding is increased, there was involved such an inconvenience that remarkable shrinkage or deformation (terrible sink) is generated in the resulting expanded beads molded article after demolding. However, by allowing the MFR to fall within the aforementioned range, this inconvenience can be solved.

The lower limit of MFR is more preferably 10 g/10 min. The upper limit of MFR is more preferably 35 g/10 min, and still more preferably 30 g/10 min.

In the expanded beads of the present invention, in particular, it is especially preferred that not only the TPU constituting the expanded beads is an ether-based TPU, but also the MFR at 190°C under a load of 10 kg of the expanded beads is 20 to 35 g/10 min. As compared with expanded beads of an ester-based TPU, the expanded beads of the ether-based TPU tends to be hardly subjected to fusion bonding. However, by allowing the MFR of the expanded beads to fall within the aforementioned range, the ether-based TPU exhibits sufficient fusion bonding properties. In addition, as compared with the ester-based TPU, the ether-based TPU is excellent in hydrolysis resistance, and therefore, by using the ether-based TPU, the hydrolysis in the production process is suppressed, whereby the MFR is readily regulated to the aforementioned range.

### [Colorant]

As the colorant, the aforementioned colorant can be used.

Though the amount of the colorant to be contained in the expanded beads of the second invention is not particularly limited, a lower limit is preferably 1,000 ppm (0.1% by mass), and more preferably 2,000 rpm (0.2% by mass). In addition, an upper limit thereof is preferably 50,000 ppm (5% by mass), more preferably 30,000 ppm (3% by mass), and still more preferably 20,000 ppm (2% by mass). In addition, the colorant to be contained in the expanded beads of the second invention is preferably a color pigment.

### [Expanded Beads]

In the expanded beads of the second invention, an apparent density of the expanded beads is 80 to 300 kg/m³. When the apparent density of the expanded beads is excessively low, on in-mold molding the expanded beads, the resulting molded article is liable to be largely shrunk and deformed. From such a viewpoint, the apparent density is preferably 100 kg/m³ or more, and more preferably 120 kg/m³ or more. On the other hand, when the apparent density is excessively high, the expanded beads are hardly secondarily expanded at the time of in-mold molding, gaps among the expanded beads of the resulting molded article are liable to remain, and there is a concern that a molded article having desired cushioning properties is not obtained. From such a viewpoint, the apparent density is preferably 250 kg/m³ or less, and more preferably 200 kg/m³ or less.

In the expanded beads of the second invention, an average cell diameter of the expanded beads is 100 to 400 µm. In the case where the average cell diameter is excessively small, the color tone of the expanded beads becomes pale in color. On the other hand, a portion coming into contact with the mold at the time of in-mold molding the expanded beads is softened and melted, and the cells are unified and become deep in color. Thus, a pale-colored portion and a deep-colored portion are existent, and color unevenness is generated in the molded article as a whole. From such a viewpoint, the average cell diameter is preferably 120 µm or more, more preferably 150 µm or more, and still more preferably 165 µm or more. On the other hand, from the viewpoint of color unevenness of the molded article, though an upper limit thereof is not particularly limited, when the average cell diameter is excessively large, there is a concern that an expanded beads molded article having desired repulsion properties is not obtained. From such a viewpoint, the average cell diameter is preferably 300 µm or less.

In the expanded beads of the second invention, the average surface cell wall thickness of the expanded beads is 15 µm or more. In the case where the average thickness is excessively thin, since the TPU is soft, when the expanded TPU beads are pressed in a heating state against a mold due to secondary expansion or the like at the time of in-mold molding, its portion is liable to be melted. The melted portion becomes deep in color as compared with a non-melted portion, and therefore, color unevenness is generated in the molded article. From such a viewpoint, the average thickness is preferably 17 µm or more, and more preferably 20 µm or more. On the other hand, when the average thickness is excessively thick, the fusion bonding properties among the expanded beads at the time of in-mold molding are lowered, and it is necessary to increase the heating temperature at the time of molding. From such a viewpoint, the average thickness is preferably 50 µm or less, more preferably 40 µm or less, and still more preferably 30 µm or less.

An average bead diameter of the aforementioned expanded beads is preferably 1 to 8 mm. When the average bead diameter of the expanded beads falls within the aforementioned range, the matter that the surfaces of the expanded beads are abruptly cooled, whereby the cells become non-uniform is hardly caused. From the aforementioned viewpoint, the average bead diameter is more preferably 1.5 to 8 mm, and still more preferably 2 to 8 mm. The average bead diameter of the expanded beads as referred to herein means a diameter of a virtual true sphere having a volume the same as a volume per one expanded bead.

### [Production Method of Expanded TPU Beads]

The production method of the expanded TPU beads of the present invention is not particularly limited. However, for example, the expanded TPU beads can be obtained by dispersing the TPU beads containing a colorant in a dispersion medium within a closed vessel; impregnating a blowing agent in the aforementioned resin beads under heating; and releasing the aforementioned TPU beads containing a blowing agent together with the dispersion medium under a temperature condition suitable for the expansion from the closed vessel under a low pressure and expanding them.

Such a production method of expanded beads is a method called a direct expansion method.

The TPU beads are not particularly limited with respect to the production method and can be obtained by a known method. For example, the TPU beads can be obtained by a strand cutting method in which the raw material TPU is melted by an extruder, the TPU melt is extruded into a strand-like form from small holes of a die annexed in a tip of the extruder, and the extrudate is then cut in a predetermined mass; an underwater cutting method (UWC method) in which the TPU melt immediately after extrusion into water from small holes is cut; or a hot cutting method in which the TPU melt immediately after extrusion from small holes is cut in a gas phase. The mass of the TPU beads can be regulated by regulating the hole diameter of the small hole, the extrusion amount, and the cutting speed.

In order to obtain the expanded TPU beads whose MFR at 190°C under a load of 10 kg is 10 to 40 g/10 min, the MFR at 190°C under a load of 10 kg of the raw material TPU to be fed into the extruder is preferably 0.1 to 30 g/10 min. The TPU is liable to be thermally decomposed or hydrolyzed within the extruder, and the MFR occasionally rises after extrusion. When the MFR of the raw material TPU is 0.1 to 30 g/10 min, it is easy to control the MFR of the expanded beads within the aforementioned range. From such a viewpoint, the lower limit of the MFR is more preferably 1 g/10 min, and the upper limit thereof is more preferably 20 g/10 min.

From the viewpoint of suppressing decomposition of TPU at the time of extrusion, a temperature of the TPU melt within the extruder is regulated to preferably 160 to 220°C, and more preferably 170 to 200°C. In addition, similarly, a residence time (pass time) of TPU within the extruder is regulated to preferably 60 to 300 seconds, and more preferably 120 to 240 seconds.

The melting temperature Tm of the TPU beads is preferably 140 to 190°C. When the melting temperature falls within the aforementioned range, fracture of the cell wall at the expansion temperature is suppressed, and expanded beads that are good in secondary expandability and fusion bonding properties are obtained. From the aforementioned viewpoint, the lower limit of the melting temperature is more preferably 150°C, still more preferably 155°C, and especially preferably 160°C. On the other hand, the upper limit thereof is more preferably 185°C, still more preferably 180°C, and especially preferably 170°C.

Though a mass of one TPU bead is properly set according to the size or apparent density of the target expanded TPU beads, it is preferably 0.5 to 30 mg. When the mass falls within the aforementioned range, the blowing agent can be thoroughly impregnated in the TPU beads, expanded beads that are small in scattering in the density within the bead are readily obtained, and expanded beads that are excellent in balance between filling properties in a mold and in-mold moldability are provided. From such a viewpoint, the lower limit of the mass of the TPU beads is more preferably 1 mg, and still more preferably 3 mg. On the other hand, the upper limit thereof is more preferably 20 mg, still more preferably 15 mg, and especially preferably 12 mg.

The TPU beads can be properly blended with, in addition to the color pigment, various additives which are usually used, such as an antistatic agent, an electrical conductivity imparting agent, a lubricant, an antioxidant, a UV absorbing agent, a flame retardant, a metal-deactivator, a crystal nucleating agent, and a filler, as the need arises. Similar to the colorant, such an additive can be blended in the TPU beads by feeding together with the raw material TPU into an extruder and then kneading them. Though the addition amount of such an additive of every kind varies with the application purpose of the expanded beads molded article, it is preferably 25 parts by mass or less, more preferably 15 parts by mass or less, still more preferably 10 parts by mass or less, and especially preferably 5 parts by mass or less based on 100 parts by mass of the raw material TPU.

The TPU beads are dispersed in a dispersion medium (typically water) in a pressurizable closed vessel, such as an autoclave.

In the dispersion medium, it is preferred to add a dispersant, such as a sparingly water-soluble inorganic material, e.g., aluminum oxide, tricalcium phosphate, magnesium pyrophosphate, zinc oxide, kaolin, mica, and talc, etc., and a dispersing aid, such as an anionic surfactant, e.g., sodium dodecylbenzenesulfonate and a sodium alkanesulfonate, as the need arises such that the TPU beads are uniformly dispersed in a dispersion medium. A mass ratio of the TPU beads to the dispersant ((resin beads)/(dispersant)) is preferably 20 to 2,000, and more preferably 30 to 1,000. In addition, a mass ratio of the dispersant to the dispersing aid ((dispersant)/(dispersing aid)) is preferably 1 to 500, and more preferably 1 to 100.

Next, a blowing agent is impregnated in the TPU beads within the closed vessel.

A physical blowing agent can be used as the blowing agent. As the physical blowing agent, examples of an organic physical blowing agent include chain aliphatic hydrocarbons, such as propane, butane, pentane, hexane, and heptane; cyclic aliphatic hydrocarbons, such as cyclopentane and cyclohexane; halogenated hydrocarbons, such as chlorofluoromethane, trifluoromethane, 1,1-difluoroethane, 1,1,1,2-tetrafluoroethane, methyl chloride, ethyl chloride, and methylene chloride; and dialkyl ethers, such as dimethyl ether, diethyl ether, and methyl ethyl ether. In addition, examples of an inorganic physical blowing agent include carbon dioxide, nitrogen, argon, air, and water.

Though the use amount of the blowing agent is properly set taking into consideration the apparent density of the target expanded beads, the kind of TPU, the kind of the blowing agent, and so on, in general, it is preferably 0.5 to 30 parts by mass based on 100 parts by mass of the TPU beads.

From the viewpoint of thoroughly impregnating the blowing agent in the TPU beads within a short period of time, it is preferred that the impregnation of the physical blowing agent into the TPU beads is performed by heating under a pressure.

A temperature (impregnation temperature) of the contents within the closed vessel on impregnating the blowing agent in the TPU beads is regulated to preferably (Tm - 80°C) or higher, and more preferably (Tm - 45°C) or higher relative to the melting temperature Tm of the TPU beads.

It is preferred that the physical blowing agent is fed under pressure into the closed vessel such that the pressure within the closed vessel is 0.5 MPa (G) or more, namely an impregnation pressure is 0.5 MPa (G) or more, and more preferably 1.0 MPa (G) or more. In addition, from the viewpoint of pressure resistance of the closed vessel, the impregnation pressure is regulated to preferably 10 MPa (G) or less, and more preferably 8.0 MPa (G) or less.

Though an impregnation time of the blowing agent is properly set according to the impregnation temperature, the impregnation pressure, the kind or mass of TPU, and so on, in order to thoroughly impregnate the physical blowing agent in the TPU beads, it is preferably 0.05 hour or more, and more preferably 0.1 hour or more. On the other hand, from the viewpoint of productivity, an upper limit thereof is regulated to preferably 3 hours or less, and more preferably 1 hour or less.

In the light of the above, the blowing agent is impregnated in the TPU beads, whereby the TPU beads (expandable beads) containing the blowing agent is formed.

When the expandable beads are released together with the dispersion medium under a lower pressure than the pressure within the closed vessel and expanded, the expanded TPU beads can be obtained.

On releasing the expandable beads under a lower pressure, by regulating a temperature of the contents within the closed vessel (expansion temperature) to (Tm - 60°C) or higher relative to the melting temperature Tm of the TPU beads, the TPU beads can be expanded to an extent of the desired apparent density. From such a viewpoint, the expansion temperature is regulated to more preferably (Tm - 50°C) or higher, still more preferably (Tm - 45°C) or higher, and especially preferably (Tm - 40°C) or higher.

From the viewpoint of in-mold moldability of the resulting expanded beads, the expansion temperature is regulated to preferably (Tm - 10°C) or lower, more preferably (Tm - 20°C) or lower, and still more preferably (Tm - 28°C) or lower.

On releasing the expandable beads from the closed vessel, in order to minimize scattering in the apparent density or the cell diameter of the resulting expanded beads, it is preferred that the pressure within the released vessel is kept constant or increased step-by-step by applying a back pressure with a gas, such as carbon dioxide and air.

In general, when the TPU beads containing a color pigment as the colorant are expanded in the aforementioned range of apparent density, the cells of the resulting expanded beads tend to become fine. By adopting a production condition as mentioned later, specifically by regulating the kind and blending amount of a cell controlling agent, the kind and impregnation pressure (impregnation amount) of a blowing agent, and the expansion temperature, even when the apparent density falls within the aforementioned range, occurrence of excessive refinement of the cells can be suppressed. Such an expansion condition is hereunder described.

The blending amount of the cell controlling agent in the TPU beads is regulated to preferably 0.2 part by mass (2,000 ppm) or less, more preferably 0.1 part by mass (1,000 ppm) or less, and still more preferably 0.05 part by mass (500 ppm) or less based on 100 parts by mass of TPU. On the other hand, when the blending amount of the cell controlling agent is excessively small, the cell diameter is liable to become non-uniform, and therefore, the blending amount is regulated to preferably 0.005 part by mass (50 ppm) or more, and more preferably 0.01 part by mass (100 ppm) or more. In addition, in the case of using water as the dispersion medium, from the viewpoint of suppressing scattering in the cells of the expanded beads, it is preferred to use, as the cell controlling agent, an inorganic powder having relatively low water absorbency, such as talc and calcium carbonate, with talc being especially preferred. In the case of using talc as the cell controlling agent, it is preferred to use talc having a 50% volume average particle diameter (d50) of 0.5 to 30 µm, and the d50 of talc is more preferably 1 to 15 µm.

In order to suppress the occurrence of refinement of the cells of the expanded TPU beads, it is preferred to use carbon dioxide as the blowing agent. In addition, by using carbon dioxide as the blowing agent, in the production equipment, an explosion-proof countermeasure as in a conventional case of using an inflammable hydrocarbon, such as butane, is not required, and therefore, it is easy to secure safety, and the equipment investment costs can be reduced.

Though it is preferred to use carbon dioxide as the blowing agent, it can also be used jointly with other physical blowing agent or chemical blowing agent. In this case, a blending ratio of carbon dioxide in the blowing agent is preferably 50% by mass or more, more preferably 70% by mass or more, and still more preferably 90% by mass or more.

In the case of using carbon dioxide as the blowing agent, from the viewpoint of not excessively refining the cell diameter of the resulting expanded beads, the impregnation pressure is regulated to preferably 7.0 MPa (G) or less, more preferably 5.0 MPa (G) or less, and still more preferably 4.0 MPa (G) or less.

The pressure within the closed vessel at the time of expansion, namely the expansion pressure is regulated to preferably lower than 3.5 MPa (G), and more preferably 3.2 MPa (G) or less. By allowing the expansion pressure to fall within the aforementioned range, it becomes easy to regulate the average cell diameter of the resulting expanded beads within the aforementioned range. On the other hand, from the viewpoint of uniformity of the cells of the expanded beads, the expansion pressure is regulated to preferably higher than 2.5 MPa (G), and more preferably 2.8 MPa (G) or more.

In the case where after expansion, the expanded TPU beads shrink to cause a reduction of the volume thereof, the expanded beads are subjected to a pressurization treatment with air, and the volume can be then recovered under atmospheric pressure. Specifically, it is preferred that the resulting expanded beads are put into a closed vessel and subjected to a pressurization treatment with compressed air of 0.05 to 0.6 MPa (G) at a temperature of 0 to 60°C for 1 to 24 hours; the pressure of the closed vessel is then released; and the resulting expanded beads are allowed to stand under atmospheric pressure at 30 to 80°C for 12 to 72 hours. According to this operation, the volume of the shrunk expanded beads can be recovered.

### [Expanded Beads Molded Article]

The expanded beads molded article which is obtained by molding the expanded TPU beads of the second invention has such an effect that it does not generate color unevenness and has uniformity in color tone.

The expanded beads molded article of the second invention is not particularly limited with respect to the production method and may be obtained by a known method, and for example, it can be produced by an in-mold molding method or the like.

Preferred embodiments (1-1) to (1-7), (2-1) to (2-5), and (3-1) to (3-5) of the present invention are hereunder described.
(1-1) An expanded thermoplastic polyurethane beads molded article that is an in-mold molded article of expanded thermoplastic polyurethane beads containing a colorant, wherein an average surface cell wall thickness of the molded article is 20 µm or more.
(1-2) The expanded thermoplastic polyurethane beads molded article as set forth in the above (1-1), wherein a variation coefficient of surface cell wall thickness of the molded article is 0.8 or less.
(1-3) A method for producing an expanded thermoplastic polyurethane beads molded article including subjecting expanded thermoplastic polyurethane beads containing a colorant to in-mold molding to produce an expanded beads molded article, wherein an average surface cell wall thickness of the expanded beads is less than 15 µm, and at the time of in-mold molding, the expanded beads are heated with steam having a temperature of higher than ((melting temperature Tm) - 25)°C and not higher than the (melting temperature Tm)°C of thermoplastic polyurethane constituting the expanded beads, thereby regulating an average surface cell wall thickness of the expanded beads molded article to 20 µm or more.
(1-4) The method for producing an expanded thermoplastic polyurethane beads molded article as set forth in the above (1-3), wherein an average cell diameter of the expanded beads is less than 150 µm.
(1-5) The method for producing an expanded thermoplastic polyurethane beads molded article as set forth in the above (1-3) or (1-4), wherein a melt flow rate at 190°C under a load of 10 kg of the expanded beads is 5 to 40 g/10 min.
(1-6) A method for producing an expanded thermoplastic polyurethane beads molded article including subjecting expanded thermoplastic polyurethane beads containing a colorant to in-mold molding to produce an expanded beads molded article, wherein an average surface cell wall thickness of the expanded beads is 15 µm or more.
(1-7) The method for producing an expanded thermoplastic polyurethane beads molded article as set forth in the above (1-6), wherein an average cell diameter of the expanded beads is 150 µm or more.
(2-1) Expanded thermoplastic polyurethane beads that are expanded thermoplastic polyurethane beads containing a colorant, wherein an apparent density of the expanded beads is 80 to 300 kg/m³, an average cell diameter of the expanded beads is 100 to 400 µm, and an average surface cell wall thickness of the expanded beads is 10 µm or more.
(2-2) The expanded thermoplastic polyurethane beads as set forth in the above (2-1), wherein the average cell diameter of the expanded beads is 120 µm or more and 300 µm or less.
(2-3) The expanded thermoplastic polyurethane beads as set forth in the above (2-1) or (2-2), wherein the average surface cell wall thickness of the expanded beads is 15 µm or more and 50 µm or less.
(2-4) The expanded thermoplastic polyurethane beads as set forth in any one of the above (2-1) to (2-3), wherein an average bead diameter of the expanded beads is 1 to 8 mm.
(2-5) An expanded thermoplastic polyurethane beads molded article, resulting from in-mold molding of the expanded thermoplastic polyurethane beads as set forth in any one of the above (2-1) to (2-4).
(3-1) Expanded thermoplastic polyurethane beads that are expanded thermoplastic polyurethane beads containing a color pigment, wherein an apparent density of the expanded beads is 80 to 300 kg/m³, and a melt flow rate at 190°C under a load of 10 kg of the expanded beads is 10 to 40 g/10 min.
(3-2) The expanded thermoplastic polyurethane beads as set forth in the above (3-1), wherein the thermoplastic polyurethane constituting the expanded beads is an ether-based thermoplastic polyurethane, and the melt flow rate at 190°C under a load of 10 kg of the expanded beads is 20 to 35 g/10 min.
(3-3) The expanded thermoplastic polyurethane beads as set forth in the above (3-1) or (3-2), wherein an average cell diameter of the expanded beads is 100 to 400 µm.
(3-4) The expanded thermoplastic polyurethane beads as set forth in any one of the above (3-1) to (3-3), wherein the content of the color pigment is 0.1 to 5% by mass.
(3-5) An expanded thermoplastic polyurethane beads molded article, resulting from in-mold molding of the expanded thermoplastic polyurethane beads as set forth in any one of the above (3-1) to (3-4).

### Examples

### <First Invention>

The first invention is hereunder described in more detail by reference to Examples, but it should be construed that the present invention is not limited by these Examples.

### Example 1-1

Raw materials used in this Example are described below.

### [Raw Materials]

- TPU: Ether-based thermoplastic polyurethane (manufactured by Covestro AG, a grade name: Desmopan 9385AU, MFR [at 190°C under a load of 10 kg]: 7 g/10 min, type A durometer hardness: 86, melting temperature: 164°C)
- Cell controlling agent: Talc (manufactured by Hayashi Kasei Co., Ltd., a product name: KHP-125B, d50: 7 µm)
- Colorant: Blue pigment

Here, the melting temperature, MFR, and type A durometer hardness of the raw material TPU were measured as follows.

### (1) Melting Temperature

The melting temperature was determined as a peak top temperature of melting peak of a DSC curve obtained at a heating rate of 10°C/min by the heat flux differential scanning calorimetry on a basis of JIS K7121-1987. As for conditioning a test piece, "the case of performing a fixed heat treatment and then measuring a melting temperature" (all of a heating rate and a cooling rate in conditioning of a test piece are set to 10°C/min) was adopted. However, at the time of conditioning the test piece, the test piece was heated for melting to a temperature of higher by about 90°C than that at the time of termination of melting peak.

### (2) Melt Flow Rate (MFR)

The MFR was measured under a condition at a temperature of 190°C under a load 10 kg on a basis of JIS K7210-2:2014. A material prepared by drying in vacuo the raw material TPU at 80°C for 4 hours to control the water content to 500 ppm or less was used as a measurement sample.

### (3) Type A Durometer Hardness

The type A durometer hardness was measured on a flat surface of a sample at a temperature of 23°C and a relative humidity of 50% by using a type A durometer hardness meter (manufactured by Kobunshi Keiki Co., Ltd.) in conformity with ASTM D2240.

### [Production of TPU Beads]

The TPU and 0.1 part by mass of talc as the cell controlling agent and 1 part by mass of the blue pigment based on 100 parts by mass of the TPU were fed into a twin-screw extruder having an inside diameter of 26 mm, and these were heat kneaded to prepare a TPU melt composition. The TPU melt composition was extruded into water from small holes of a nozzle annexed in a tip of the extruder and cut, thereby obtaining TPU beads having an average mass of 10 mg and an L/D of 1.0.

### [Preparation of Expanded Beads]

1 kg of the above-obtained TPU beads and 3 liters of water as a dispersion medium were charged in a 5-liter autoclave equipped with a stirrer, and 0.3 part by mass of kaolin as a dispersant and 0.004 part by mass of a sodium alkylbenzenesulfonate as a surfactant based on 100 parts by mass of the TPU beads were further added to the dispersion medium.

The temperature was raised while stirring the contents within the autoclave, and after reaching 130°C, carbon dioxide as a blowing agent was fed under pressure into the autoclave until reaching 3.5 MPa (G), followed by keeping at 130°C for 15 minutes while maintaining the pressure of 3.5 MPa (G). Thereafter, a back pressure with nitrogen was applied, and the TPU beads having the blowing agent impregnated therein were released under atmospheric pressure together with the dispersion medium at an expansion temperature of 130°C, while adjusting the pressure within the vessel (expansion pressure) in a fixed level of 3.5 MPa (G), thereby obtaining expanded TPU beads.

After drying the obtained expanded beads at 60°C for 12 hours, the expanded beads were put into a closed vessel and pressurized with compressed air of 0.3 MPa (G) at 30°C for 12 hours. Thereafter, the pressure was released, and the resultant was allowed to stand under atmospheric pressure at 40°C for 24 hours, thereby obtaining blue expanded beads having an apparent density of 149 kg/m³, an average cell diameter of 108 µm, an average surface cell wall thickness of 14 µm, a variation coefficient of surface cell wall thickness of 0.54, a melting temperature Tm of the thermoplastic polyurethane constituting the expanded beads of 164°C, and an MFR of 29 g/10 min.

The measurement methods of average cell diameter, average surface cell wall thickness, and variation coefficient of surface cell wall thickness of the blue expanded beads are described below. These measurements were performed after conditioning by allowing the resulting expanded beads to stand under a condition at a relative humidity of 50% and at 23°C under 1 atm for 2 days. The melting temperature Tm and MFR of the thermoplastic polyurethane constituting the expanded beads were measured in the same manner as that in the aforementioned raw material TPU, except for using the expanded TPU beads as the measurement sample.

### (Average Cell Diameter, Average Surface Cell wall Thickness, and Variation Coefficient of Surface Cell wall Thickness of Expanded Beads)

50 expanded beads were selected at random from the group of the obtained expanded beads. The expanded bead was bisected so as to pass through the center of the expanded bead. An enlarged photograph of one cross section of the respective cut expanded bead was taken, and four line segments were drawn equiangularly from the outermost surface of the expanded bead in the enlarged photograph so as to pass through the center thereof until reaching the outermost surface on the opposite side.

The number of cells crossing each of the line segments was measured, respectively, and a total length of the four line segments was divided by the total number of cells crossing the line segments to determine an average chord length of the cells, which was further divided by 0.616, thereby determining the average cell diameter of each of the expanded beads. Then, these values were arithmetically averaged, thereby determining the average cell diameter of the expanded beads.

On the line segment, a length (outermost surface cell wall thickness) of from the outermost surface of the expanded bead to a bubble located in the outermost part of the expanded bead was measured, and those values were arithmetically averaged, thereby determining the average surface cell wall thickness of each of the expanded beads. Then, these values were arithmetically averaged, thereby determining the average surface cell wall thickness of the expanded beads.

Furthermore, a standard deviation of the surface cell wall thickness was determined, and the standard deviation was divided by the average surface cell wall thickness, thereby determining a variation coefficient of surface cell wall thickness.

### [Preparation of Expanded Beads Molded Article]

The above-prepared expanded beads were filled in a cavity of a mold of 200 mm in length × 250 mm in width × 20 mm in thickness and heated with steam until reaching 0.28 MPa (G). A maximum steam temperature Ta within the mold was 142°C. Then, after cooling, the molded article was taken out from the mold, thereby obtaining an expanded beads molded article in the form of a plank.

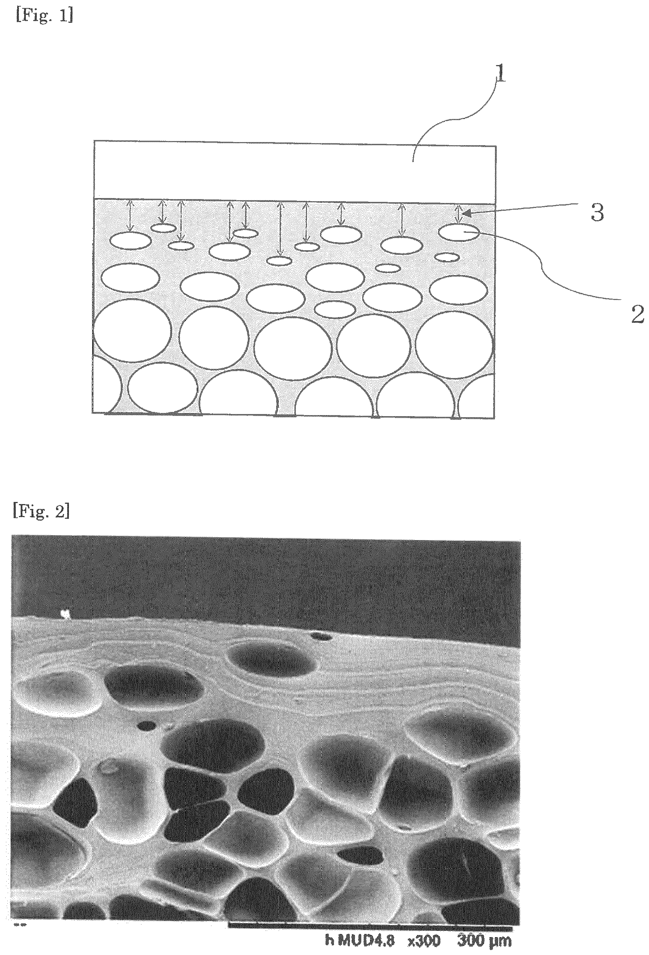

With respect to the obtained molded article, the apparent density, the average cell diameter, the average surface cell wall thickness, and the variation coefficient of surface cell wall thickness were measured, and the color developing properties, the color unevenness, and the gaps among the expanded beads were evaluated. These measurements and evaluations were performed after conditioning by allowing the obtained expanded beads molded article to stand under a condition at a relative humidity of 50% and at 23°C under 1 atm for 2 days. The obtained results are shown in Table 1, and a cross-sectional photograph of the obtained molded article is shown in Fig. 2. In addition, the measurement methods and the evaluation methods are described below.

### (Apparent Density of Expanded Beads Molded Article)

The apparent density of the expanded beads molded article was determined by immersing the expanded beads molded article in ethanol, determining an apparent volume V2 of the expanded beads molded article from the level rise, performing division of a mass W2 of the expanded beads molded article (W2/V2), and converting the unit into [g/cm³].

### (Average Cell Diameter of Expanded Beads Molded Article)

The vicinity of the center of the expanded beads molded article in the longitudinal direction was cut along the width direction, thereby forming a cut surface. In the vicinity of the center of one cut surface, the number of cells crossing a line segment of 30 mm along the width direction was measured, and the length of the line segment was divided by the number of cells crossing the line segment to determine an average chord length of the cells, which was further divided by 0.616, thereby determining the average cell diameter of the expanded beads molded article.

### (Average Surface Cell wall Thickness and Variation Coefficient of Surface Cell wall Thickness of Expanded Beads Molded Article)

The expanded beads molded article was cut along the width direction at a position sectioning the longitudinal direction into six, thereby forming five cross sections. In ten places selected at random of each cross section, a length (surface cell wall thickness) of from the outermost surface of the expanded beads molded article to a bubble located in the outermost part of the molded article was measured as shown in Fig. 1, those values were arithmetically averaged, thereby determining the average surface cell wall thickness of the expanded beads molded article. In addition, a standard deviation of the surface cell wall thickness was determined, and the standard deviation was divided by the average surface cell wall thickness of the molded article, thereby determining a variation coefficient of surface cell wall thickness.

### (Color Developing Properties of Molded Article)

The molded article was visually observed and evaluated according to the following criteria.
A: The color developing properties are excellent.
B: The color developing properties are inferior.
X: The color developing properties are remarkably inferior.

### (Color Unevenness of Molded Article)

The molded article was visually observed and evaluated according to the following criteria.
A: The color unevenness is not substantially observed.
B: The color unevenness is slightly observed but is at a level causing no problems.
X: The color unevenness is remarkable.

### (Gaps among Expanded Beads)

The molded article was visually observed and evaluated according to the following criteria.
A: Gaps among the expanded beads are not substantially observed.
B: Small gaps among the expanded beads are observed but are at a level causing no problems.
X: Large gaps among the expanded beads are observed.

### Comparative Example 1-1

The production was performed in the same manner as in Example 1-1, except for changing the molding steam pressure at the time of molding of the blue expanded beads produced in Example 1-1 to 0.23 MPa (G), thereby obtaining an expanded beads molded article. As a result, the maximum steam temperature Ta within the mold was 137°C.

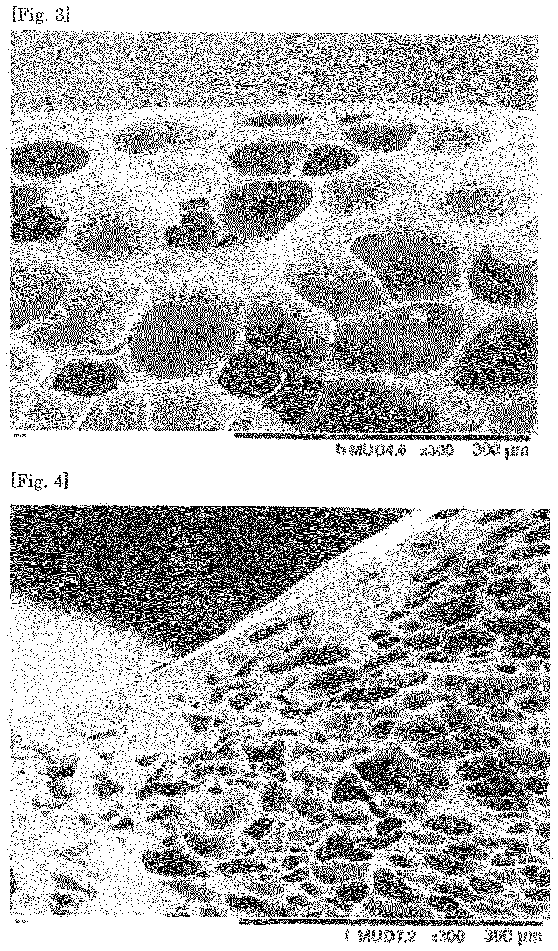

With respect to the obtained expanded beads molded article, the apparent density, the average cell diameter, the average surface cell wall thickness, and the variation coefficient of surface cell wall thickness were measured, and the color developing properties, the color unevenness, and the gaps among the expanded beads were evaluated in the same manner as in Example 1-1. The obtained results are shown in Table 1, and a cross-sectional photograph of the obtained molded article is shown in Fig. 3.

### Example 1-2

Red expanded beads were produced in the same manner as in Example 1-1, except for using 1 part by mass of a red pigment as the colorant and changing the expansion temperature to 128°C [melting temperature Tm: 164°C, MFR: 28 g/10 min], from which was then obtained an expanded beads molded article while setting the molding steam pressure to 0.35 MPa (G). The maximum steam temperature Ta within the mold at the time of molding was 148°C.

With respect to the obtained expanded beads molded article, the apparent density, the average cell diameter, the average surface cell wall thickness, and the variation coefficient of surface cell wall thickness were measured, and the color developing properties, the color unevenness, and the gaps among the expanded beads were evaluated in the same manner as in Example 1-1. The obtained results are shown in Table 1, and a cross-sectional photograph of the obtained molded article is shown in Fig. 4.

### Comparative Example 1-2

The production was performed in the same manner as in Example 1-2, except for changing the molding steam pressure at the time of molding of the red expanded beads produced in Example 1-2 to 0.25 MPa (G), thereby obtaining an expanded beads molded article. As a result, the maximum steam temperature Ta within the mold was 139°C.

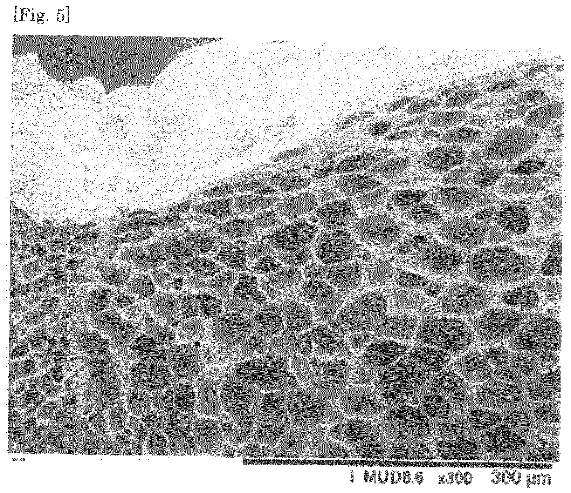

With respect to the obtained expanded beads molded article, the apparent density, the average cell diameter, the average surface cell wall thickness, and the variation coefficient of surface cell wall thickness were measured, and the color developing properties, the color unevenness, and the gaps among the expanded beads were evaluated in the same manner as in Example 1-1. The obtained results are shown in Table 1, and a cross-sectional photograph of the obtained molded article is shown in Fig. 5.

### Example 1-3

Blue expanded beads were produced in the same manner as in Example 1-1, except for setting the blowing agent impregnation temperature to 135°C, the impregnation pressure to 2.5 MPa (G), the expansion temperature to 135°C, and the expansion pressure to 2.5 MPa (G), respectively, from which was then obtained an expanded beads molded article while setting the molding steam pressure to 0.20 MPa (G). The maximum steam temperature Ta within the mold was 134°C.

With respect to the obtained expanded beads molded article, the apparent density, the average cell diameter, the average surface cell wall thickness, and the variation coefficient of surface cell wall thickness were measured, and the color developing properties, the color unevenness, and the gaps among the expanded beads were evaluated in the same manner as in Example 1-1. The obtained results are shown in Table 1.

**Table 1**

| | | | Example 1-1 | Example 1-2 | Example 1-3 | Comparative Example 1-1 | Comparative Example 1-2 |
|---|---|---|---|---|---|---|---|
| Raw material (TPU beads) | MFR of raw material TPU (at 190°C under a load of 10 kg) | g/10 min | 7 | 7 | 7 | 7 | 7 |
| | Melting temperature of raw material TPU | °C | 164 | 164 | 164 | 164 | 164 |
| | Talc | ppm | 1000 | 1000 | 1000 | 1000 | 1000 |
| | Colorant | parts by mass | Blue: 1.0 | Red: 1.0 | Blue: 1.0 | Blue: 1.0 | Red: 1.0 |
| Expansion condition | Expansion temperature | °C | 130 | 128 | 135 | 130 | 128 |
| | Expansion pressure | MPa (G) | 3.5 | 3.5 | 2.5 | 3.5 | 3.5 |
| Expanded beads | MFR (at 190°C under a load of 10 kg) | g/10 min | 29 | 28 | 30 | 29 | 28 |
| | Melting temperature (Tm) | °C | 164 | 164 | 164 | 164 | 164 |
| | Average surface cell wall thickness | µm | 14 | 5 | 23 | 14 | 5 |
| | Variation coefficient of surface cell wall thickness | - | 0.54 | 0.72 | 0.53 | 0.54 | 0.72 |
| | Average cell diameter | µm | 108 | 50 | 186 | 108 | 50 |
| Molding condition | Molding steam pressure | MPa (G) | 0.28 | 0.35 | 0.20 | 0.23 | 0.25 |
| | Maximum steam temperature (Ta) | °C | 142 | 148 | 134 | 137 | 139 |
| | Tm - Ta | °C | 22 | 16 | 30 | 27 | 25 |
| Molded article | Apparent density | g/cm³ | 0.24 | 0.24 | 0.24 | 0.24 | 0.24 |
| | Average surface cell wall thickness | µm | 36 | 23 | 29 | 19 | 15 |
| | Variation coefficient of surface cell wall thickness | - | 0.71 | 0.70 | 0.58 | 0.87 | 0.98 |
| | Average cell diameter | µm | 121 | 35 | 174 | 107 | 37 |
| | Color developing properties | - | A | A | A | B | X |
| | Color unevenness | - | A | B | A | X | X |
| | Gaps among expanded beads | - | A | B | A | B | X |

As noted from the evaluation results shown in Table 1, the expanded beads molded articles of Examples 1-1, 1-2, and 1-3, in which the average surface cell wall thickness is 20 µm or more, were excellent in the designability because they have good color developing properties, are free from the color unevenness, and do not have gaps among the expanded beads, whereas the expanded beads molded articles of Comparative Examples 1-1 and 1-2, in which the average surface cell wall thickness is less than 20 µm, were inferior in the designability such that the color developing properties are inferior, and the color unevenness and gaps among the expanded beads remain.

Examples 1-1 and 1-2 are corresponding to the first production method of an expanded TPU beads molded article, and Example 1-3 is corresponding to the second production method of an expanded TPU beads molded article.

### <Second Invention (1)>

The second invention (1) is hereunder described in more detail by reference to Examples, but it should be construed that the present invention is not limited by these Examples.

### Examples 2-1 to 2-5 and Comparative Examples 2-1 to 2-3

Raw materials used in these Examples are described below.

### [Raw Materials]

- TPU: Ether-based thermoplastic polyurethane (manufactured by DIC Covestro Polymer Ltd., a grade name: 9385AU, MFR [at 190°C under a load of 10 kg]: 10 g/10 min, type A durometer hardness: 86, melting temperature: 165°C)
- Pigment master batch (blue colored master batch): Pandex B-UN91-9127-20

### (Phthalocyanine Blue)

- Cell controlling agent: Talc (manufactured by Hayashi Kasei Co., Ltd., a product name: KHP-125B, d50: 7 µm)
- Hindered phenol-based compound: Bis[3-(3-t-butyl-4-hydroxy-5-methylphenyl)propionic acid][ethylenebis(oxyethylene)] (manufactured by BASF Japan Ltd., a product name: Irganox 245)
- Benzotriazole-based compound: 2-[2-Hydroxy-3,5-bis(α,α-dimethylbenzyl)phenyl]-2H-benzotriazole (manufactured by BASF Japan Ltd., a product name: Tinuvin 234)
- Hindered amine-based compound: Bis[1,2,2,6,6-pentamethyl-4-piperidinyl] 2-[[3,5-bis(1,1-dimethylethyl)-4-hydroxyphenyl]methyl]-2-butylpropanedioate (manufactured by BASF Japan Ltd., a product name: Tinuvin PA144)

### [Production of TPU Beads]

The TPU and talc as the cell controlling agent in an amount shown in Table 2, 1 part by mass of the pigment master batch, 0.1 part by mass of the hindered phenol-based compound, 0.1 part by mass of the benzotriazole-based compound, and 0.1 part by mass of the hindered amine-based compound based on 100 parts by mass of the TPU were fed into a twin-screw extruder having an inside diameter of 20 mm, and these were heat kneaded to prepare a TPU melt composition. The TPU melt composition was extruded into water from small holes of a nozzle annexed in a tip of the extruder and cut, thereby obtaining TPU beads having an average mass of 10 mg and an L/D of 1.0.

### [Preparation of Expanded Beads]

50 kg of the above-obtained TPU beads and 270 liters of water as a dispersion medium were charged in a 400-liter autoclave equipped with a stirrer, and 0.2 part by mass of kaolin as a dispersant and 0.008 part by mass of a sodium alkylbenzenesulfonate as a surfactant based on 100 parts by mass of the TPU beads were further added to the dispersion medium.

The temperature was raised while stirring the contents within the autoclave; after reaching a temperature (impregnation temperature) shown in Table 2, carbon dioxide as a blowing agent was fed under pressure into the autoclave until the pressure within the closed vessel reached a pressure (impregnation pressure) shown in Table 2; and after reaching a predetermined pressure, the resultant was kept at that temperature for 15 minutes while maintaining the pressure. Thereafter, a back pressure with carbon dioxide was applied, and the TPU beads having the blowing agent impregnated therein were released under atmospheric pressure together with the dispersion medium at a temperature (expansion temperature) of the dispersion medium shown in Table 2, while adjusting the pressure in the vessel in terms of a pressure (expansion pressure) shown in Table 2 in a fixed level, thereby obtaining expanded beads.

The obtained expanded beads were put into a closed vessel and pressurized with compressed air of 0.3 MPa (G) at 30°C for 12 hours. Thereafter, the pressure was released, and the resultant was allowed to stand under atmospheric pressure at 40°C for 48 hours.

The apparent density, average bead diameter, average cell diameter, and average surface cell wall thickness of the obtained expanded beads are shown in Table 2.

The measurement methods of the apparent density, average bead diameter, average cell diameter, and average surface cell wall thickness of the expanded beads are described below. These measurements were performed after conditioning by allowing the obtained expanded beads to stand under a condition at a relative humidity of 50% and at 23°C under 1 atm for 2 days.

### (Apparent Density and Average Bead Diameter)

First of all, in a graduated measuring cylinder charged with water at a temperature of 23°C, the expanded beads having a mass W1 were sunk using a wire net. Then, taking into consideration the volume of the wire net, a volume V1 [L] of the expanded beads as read out from the level rise was measured, the mass W1 [g] of the expanded beads was divided by the volume V1 (W1/V1), and the unit was converted into [kg/m³], thereby determining the apparent density of the expanded beads. In addition, the volume V1 was divided by the number of expanded beads charged in the graduated measuring cylinder, to determine a volume per expanded bead, and a diameter of a virtual true sphere having a volume the same as the determined volume was defined as the average bead diameter [mm] of the expanded beads.

### (Average Cell Diameter and Average Surface Cell wall Thickness)

50 expanded beads were selected at random from the group of the obtained expanded beads. The expanded bead was bisected so as to pass through the center of the expanded bead. In one cross section of each of the cut expanded bead, four line segments were drawn equiangularly from the outermost surface of the expanded bead so as to pass through the center thereof until reaching the outermost surface on the opposite side.

The number of cells crossing each of the line segments was measured, respectively, and a total length of the four line segments was divided by the total number of cells crossing the line segments to determine an average chord length of the cells, which was further divided by 0.616, thereby determining the average cell diameter of each of the expanded beads. Then, these values were arithmetically averaged, thereby determining the average cell diameter of the expanded beads.

On the line segment, a length (outermost surface cell wall thickness) of from the outermost surface of the expanded bead to a bubble located in the outermost part of the expanded bead was measured, and those values were arithmetically averaged, thereby determining the average surface cell wall thickness of each of the expanded beads. Then, these values were arithmetically averaged, thereby determining the average surface cell wall thickness of the expanded beads.

### [Preparation of Expanded Beads Molded Article]

The above-prepared expanded beads were filled in a cavity of a mold of 200 mm in length × 250 mm in width × 20 mm in thickness and heated with steam until reaching 0.250 MPa (G). Then, after cooling, the molded article was taken out from the mold, thereby obtaining an expanded beads molded article in the form of a plank. In addition, an expanded beads molded article in the form of a plank was obtained in the same manner, except for changing the reaching pressure of the steam to 0.225 MPa (G).

In order to evaluate the fusion bonding properties of the obtained expanded beads molded article, a degree of fusion bonding was measured. The case where the degree of fusion bonding is 100% was evaluated as "A"; the case where the degree of fusion bonding is 80% or more and less than 100% was evaluated as "B"; and the case where the degree of fusion bonding is 60% or more and less than 80% was evaluated as "X", respectively.

The degree of fusion bonding of the expanded beads molded article was measured by the following method. A test piece was cut out from the expanded beads molded article so as to set the length to 170 mm and the width to 30 mm, respectively while allowing the thickness to stand as it was. One of the surfaces of this test piece was incised with a cutter knife in a depth of about 10 mm so as to bisect the length of the test piece, and the molded article was bent from the incised part and fractured. A ratio (m/n × 100 [%]) of the number (m) of material-fractured expanded beads existent on the fractured surface to the number (n) of all of the expanded beads existent on the fractured surface was calculated. In the case where even when the molded article was bent, it could not be fractured, the degree of fusion bonding was defined as 100%. The measurement was performed five times using different test pieces, and a rate of material fracture of each test piece was determined and then arithmetically averaged to define the degree of fusion bonding.

With respect to the expanded beads molded article obtained under a steam pressure of 0.250 MPa (G), the state of color tone (uniformity of color) was evaluated according to the following criteria. The results are shown in Table 2.
A: The color of the surface of the molded article is uniform.
X: On the surface of the molded article, the color of the central part of the expanded bead is deeper than the color of the periphery of the expanded bead, and hence, color unevenness is generated as the whole of the molded article.

**Table 2**

| | | | | Example 2-1 | Example 2-2 | Example 2-3 | Example 2-4 | Example 2-5 | Comparative Example 2-1 | Comparative Example 2-2 | Comparative Example 2-3 |
|---|---|---|---|---|---|---|---|---|---|---|---|
| Raw material TPU | MFR | | g/10 min | 10 | 10 | 10 | 10 | 10 | 10 | 10 | 10 |
| | Melting point | | °C | 165 | 165 | 165 | 165 | 165 | 165 | 165 | 165 |
| TPU beads | Talc | | parts by weight | 0.1 | 0.1 | 0.02 | 0.02 | 0.02 | 0.1 | 0.1 | 0.02 |
| | MFR | | g/10 min | 28 | 28 | 31 | 31 | 31 | 26 | 28 | 31 |
| Expansion condition | Impregnation temperature | | °C | 132.5 | 135.0 | 130.0 | 132.0 | 138.0 | 129.0 | 130.0 | 127.5 |
| | Impregnation pressure | | MPa (G) | 3.0 | 2.5 | 3.5 | 3.0 | 2.0 | 3.5 | 3.5 | 4.0 |
| | Expansion temperature | | °C | 132.5 | 135.0 | 130.0 | 132.0 | 138.0 | 129.0 | 130.0 | 127.5 |
| | Expansion pressure | | MPa (G) | 3.0 | 2.5 | 3.5 | 3.0 | 2.0 | 3.5 | 3.5 | 4.0 |
| Expanded bead | Apparent density | | kq/m3 | 139 | 150 | 153 | 153 | 164 | 171 | 149 | 177 |
| | Average cell diameter | | µm | 177 | 281 | 209 | 201 | 367 | 94 | 180 | 89 |
| | Average surface cell wall thickness | | µm | 18 | 22 | 15 | 22 | 33 | 9 | 9 | 15 |
| | Average bead diameter | | mm | 5.2 | 5.0 | 5.0 | 5.0 | 4.9 | 5.3 | 5.0 | 4.8 |
| Evaluation of molded article | Degree of fusion bonding | 0.225 MPa (G) | - | A | A | A | A | B | A | A | A |
| | | 0.250 MPa (G) | - | A | A | A | A | A | A | A | A |
| | Uniformity of color | | - | A | A | A | A | A | X | X | X |

As noted from the evaluation results shown in Table 2, the expanded beads molded articles resulting from in-mold molding of the expanded beads having an apparent density of 80 to 300 kg/m³, an average cell diameter of 100 to 400 µm, and an average surface cell wall thickness of 15 µm or more are free from the color unevenness and uniform in color tone, whereas the molded articles of expanded beads not satisfying these requirements generated the color unevenness.

### <Second Invention (2)>

The second invention (2) is hereunder described in more detail by reference to Examples, but it should be construed that the present invention is not limited by these Examples.

### Examples 3-1 to 3-5 and Comparative Example 3-1

Raw materials used in these Examples are described below.

### [Raw Materials]

- TPU: Ether-based thermoplastic polyurethane (manufactured by DIC Covestro Polymer Ltd., a grade name: 9385AU, MFR [at 190°C under a load of 10 kg]: 10 g/10 min, type A durometer hardness: 86, melting temperature: 165°C)

Even in TPUs having the same grade name, the MFR varied with the production lot, and therefore, the MFR of the raw material TPU used is shown in Table 3.
- Color pigment (blue colored master batch): Manufactured by DIC Covestro Polymer Ltd., Pandex B-UN91-9127-20
- Color pigment (red colored master batch): Manufactured by DIC Covestro Polymer Ltd., Pandex B-PU2R142-15
- Color pigment (black colored master batch): Manufactured by DIC Covestro Polymer Ltd., Urethane Black DN20A
- Cell controlling agent: Talc (manufactured by Hayashi Kasei Co., Ltd., a product name: KHP-125B, d50: 7 µm)

### [Production of TPU Beads]

The TPU and talc as the cell controlling agent in an amount shown in Table 3 and 1 part by mass of the color pigment based on 100 parts by mass of the TPU were fed into a twin-screw extruder having an inside diameter of 26 mm, and these were heat kneaded at 200°C to prepare a TPU melt composition. The TPU melt composition was extruded into water from small holes of a die annexed in a tip of the extruder and cut, thereby obtaining TPU beads having an average mass of 10 mg and an L/D of 1.0. The pass time was 180 seconds.

### [Preparation of Expanded Beads]

50 kg of the above-obtained TPU beads and 270 liters of water as a dispersion medium were charged in a 400-liter autoclave equipped with a stirrer, and 0.2 part by mass of kaolin as a dispersant and 0.008 part by mass of a sodium alkylbenzenesulfonate as a surfactant based on 100 parts by mass of the TPU beads were further added to the dispersion medium.

The temperature was raised while stirring the contents within the autoclave; after reaching a temperature (impregnation temperature) shown in Table 3, carbon dioxide as a blowing agent was fed under pressure into the autoclave until the pressure within the closed vessel reached a pressure (impregnation pressure) shown in Table 3; and after reaching a predetermined pressure, the resultant was kept at that temperature for 15 minutes while maintaining the pressure. Thereafter, a back pressure with carbon dioxide was applied, and the TPU beads having the blowing agent impregnated therein were released under atmospheric pressure together with the dispersion medium at a temperature (expansion temperature) of the dispersion medium shown in Table 3, while adjusting the pressure in the vessel in terms of a pressure (expansion pressure) shown in Table 3 in a fixed level, thereby obtaining expanded beads.

The obtained expanded beads were put into a closed vessel and pressurized with compressed air of 0.3 MPa (G) at 30°C for 12 hours. Thereafter, the pressure was released, and the resultant was allowed to stand under atmospheric pressure at 40°C for 48 hours.

The apparent density, MFR, average cell diameter, and average cell wall thickness of the obtained expanded beads are shown in Table 3.

The measurement methods of the apparent density, MFR, average cell diameter, and average surface cell wall thickness of the expanded beads are described below. These measurements were performed after conditioning by allowing the obtained expanded beads to stand under a condition at a relative humidity of 50% and at 23°C under 1 atm for 2 days.

### (Apparent Density)

First of all, in a graduated measuring cylinder charged with water at a temperature of 23°C, the expanded beads having a mass W1 were sunk using a wire net. Then, taking into consideration the volume of the wire net, a volume V1 [L] of the expanded beads as read out from the level rise was measured, the mass W1 [g] of the expanded beads was divided by the volume V1 (W1/V1), and the unit was converted into [kg/m³], thereby determining the apparent density of the expanded beads.

### (MFR)

The measurement was performed under a temperature of 190°C under a load of 10 kg on a basis of JIS K7210-2:2014. The expanded beads which had been conditioned were put in a vacuum oven at 80°C and dried in vacuo for 4 hours, to control the water content of the expanded beads to 500 ppm by mass or less, and the measurement of MFR was then performed.

### (Average Cell Diameter)

50 expanded beads were selected at random from the group of the resulting expanded beads. The expanded bead was bisected so as to pass through the center of the expanded bead. In one cross section of each of the cut expanded beads, four line segments were drawn equiangularly from the outermost surface of the expanded bead so as to pass through the center thereof until reaching the outermost surface on the opposite side.

The number of cells crossing each of the line segments was measured, respectively, and a total length of the four line segments was divided by the total number of cells crossing the line segments to determine an average chord length of the cells, which was further divided by 0.616, thereby determining the average cell diameter of each of the expanded beads. Then, these values were arithmetically averaged, thereby determining the average cell diameter of the expanded beads.

On the line segment, a length (outermost surface cell wall thickness) of from the outermost surface of the expanded bead to a cell located in the outermost part of the expanded bead was measured, and those values were arithmetically averaged, thereby determining the average surface cell wall thickness of each of the expanded beads. Then, these values were arithmetically averaged, thereby determining the average surface cell wall thickness of the expanded beads.

### [Preparation of Expanded Beads Molded Article]

The above-prepared expanded beads were filled in a cavity of a mold of 200 mm in length × 250 mm in width × 20 mm in thickness and heated with steam until reaching a molding pressure shown in Table 3. Then, after cooling, the molded article was taken out from the mold, thereby obtaining an expanded beads molded article in the form of a plank. The obtained expanded beads molded article was allowed to stand under a condition at a relative humidity of 50% and at 23°C under 1 atm for 2 days, to perform conditioning of the expanded beads molded article, followed by performing the following evaluations.

### (Evaluation of Expanded Bead Molded Article (Surface State))

The case where the gaps among the expanded beads on the surface of the obtained expanded beads molded article were not substantially observed was evaluated as "A", and the case where the gaps were observed was evaluated as "X".

### (Evaluation of Expanded Bead Molded Article (Fusion Bonding))

In order to evaluate the fusion bonding properties of the obtained expanded beads molded article, a degree of fusion bonding was measured. The case where the degree of fusion bonding is 90% or more was evaluated as "A", and the case where the degree of fusion bonding is less than 90% was evaluated as "X".

The degree of fusion bonding of the expanded beads molded article was measured by the following method. A test piece was cut out from the expanded beads molded article so as to set the length to 170 mm and the width to 30 mm, respectively while allowing the thickness to stand as it was. One of the surfaces of this test piece was incised with a cutter knife in a depth of about 10 mm so as to bisect the length of the test piece, and the molded article was bent from the incised part and fractured. A ratio (m/n × 100 [%]) of the number (m) of material-fractured expanded beads existent on the fractured surface to the number (n) of all of the expanded beads existent on the fractured surface was calculated. In the case where even when the molded article was bent, it could not be fractured, the degree of fusion bonding was defined as 100%. The measurement was performed five times using different test pieces, and a rate of material fracture of each test piece was determined and then arithmetically averaged to define the degree of fusion bonding.

With respect to the resulting expanded beads molded article, the state of color tone (uniformity of color) was evaluated according to the following criteria. The results are shown in Table 3.
A: The color of the surface of the molded article is uniform.
X: On the surface of the molded article, the color of the central part of the expanded bead is deeper than the color of the periphery of the expanded bead, and hence, color unevenness is generated as the whole of the molded article.

### (Evaluation of Expanded Beads Molded Article (Terrible Sink))

The thickness of each of the central part and four corner parts of the obtained expanded beads molded article was measured. The case where a ratio of the thickness of the central part to the thickness of a thickest part among the four corner parts is 90% or more was evaluated as excellent and is noted as "A" in Table 3, and the case where the ratio is less than 90% was evaluated as poor and is noted as "X" in Table 3.

### (Evaluation of Expanded Beads Molded Article (Shrinkage Factor))

The shrinkage factor was measured in the following manner.

A maximum length L [mm] in the width direction of the expanded beads molded article was measured, the length L was subtracted from the length 250 mm in the width direction of the molding cavity and further divided by 250 mm ((250 - L) × 100/250), thereby determining the shrinkage factor (%) of the expanded beads molded article.

**Table 3**

| | | | Example 3-1 | | | | Example 3-2 | | | | | Example 3-3 | | | Comparative Example 3-1 | | | | Example 3-4 | | | | | Example 3-5 | | | |
|---|---|---|---|---|---|---|---|---|---|---|---|---|---|---|---|---|---|---|---|---|---|---|---|---|---|---|---|
| Raw material TPU | MFR | g/10 min | 3.2 | | | | 10 | | | | | 3.1 | | | 13 | | | | 3.1 | | | | | 3.5 | | | |
| TPU beads | Weight of beads | mg | 10 | | | | 10 | | | | | 10 | | | 5 | | | | 20 | | | | | 10 | | | |
| | Color | - | Blue | | | | Blue | | | | | Blue | | | Red | | | | Black | | | | | Blue | | | |
| | Talc | parts by weight | 0.1 | | | | 0.1 | | | | | 0.1 | | | - | | | | - | | | | | 0.1 | | | |
| | MFR | g/10 min | 26 | | | | 28 | | | | | 35 | | | 34 | | | | 21 | | | | | 42 | | | |
| Expansi on condition | Impregnation temperature | °C | 133 | | | | 133 | | | | | 133 | | | 133 | | | | 130 | | | | | 133 | | | |
| | Impregnation pressure | MPa (G) | 3.0 | | | | 3.0 | | | | | 3.0 | | | 3.5 | | | | 4.0 | | | | | 3.0 | | | |
| | Expansi on temperature | °C | 133 | | | | 133 | | | | | 133 | | | 133 | | | | 130 | | | | | 133 | | | |
| | Expansi on pressure | MPa (G) | 3.0 | | | | 3.0 | | | | | 3.0 | | | 3.5 | | | | 4.0 | | | | | 3.0 | | | |
| Expanded beads | Apparent density | kg/m³ | 179 | | | | 157 | | | | | 169 | | | 156 | | | | 166 | | | | | 153 | | | |
| | MFR | g/10 min | 26 | | | | 28 | | | | | 35 | | | 34 | | | | 21 | | | | | 42 | | | |
| | Average cell diameter | µm | 182 | | | | 177 | | | | | 323 | | | 102 | | | | 200 | | | | | 245 | | | |
| | Average surface cell wall thickness | µm | 15 | | | | 18 | | | | | 27 | | | 11 | | | | 15 | | | | | 19 | | | |
| Molded article | Molding pressure | MPa (G) | 0.200 | 0.225 | 0.250 | 0.275 | 0.175 | 0.200 | 0.225 | 0.250 | 0.275 | 0.200 | 0.225 | 0.250 | 0.175 | 0.200 | 0.225 | 0.250 | 0.225 | 0.250 | 0.275 | 0.300 | 0.325 | 0.175 | 0.200 | 0.225 | 0.250 |
| | Surface state | - | X | A | A | A | X | A | A | A | A | X | A | A | X | A | A | A | X | A | A | A | A | A | A | A | A |
| | Fusion bonding | - | A | A | A | A | A | A | A | A | A | A | A | A | A | A | A | A | A | A | A | A | A | X | A | A | A |
| | Terrible Sink | - | A | A | A | X | A | A | A | A | X | A | A | X | A | A | A | X | A | A | A | A | X | A | X | X | X |
| | Density | kg/m³ | 227 | 226 | 226 | 228 | 211 | 210 | 207 | 205 | 205 | 219 | 223 | 239 | 202 | 208 | 208 | 207 | 207 | 211 | 207 | 208 | 210 | 208 | 224 | 231 | 230 |
| | Color unevenness | - | A | A | A | A | A | A | A | A | A | A | A | A | X | X | X | X | A | A | A | A | A | A | A | A | A |
| | Shrinkage factor | % | 4.4 | 4.2 | 4.0 | 4.6 | 4.0 | 4.0 | 4.0 | 3.6 | 4.0 | 4.4 | 4.8 | 7.2 | 5.0 | 5.2 | 4.8 | 4.8 | 4.4 | 4.6 | 5.4 | 5.4 | 5.6 | 4.8 | 5.6 | 6.6 | 8.0 |

As noted from the evaluation results shown in Table 3, in Examples 3-1 to 3-5 in which the apparent density of the expanded beads is 80 to 300 kg/m³, the average cell diameter of the expanded beads is 100 to 400 µm, and the average surface cell wall thickness of the expanded beads is 15 µm or more, the expanded beads molded articles which are free from the generation of color unevenness and uniform in the color tone are obtained. Above all, in Examples 3-1 to 3-4 in which the MFR of the expanded beads is 10 to 40 g/10 min, the expanded beads molded articles which are wide in the moldable range, excellent in the fusion bonding properties of expanded beads, and free from the shrinkage (terrible sink) are obtained.

### REFERENCE SIGNS LIST

1: Surface of expanded beads molded article
2: Bubble
3: Distance between expanded beads molded article surface and bubble outer surface

## Claims

1. An expanded thermoplastic polyurethane beads molded article that is an in-mold molded article of expanded thermoplastic polyurethane beads containing a colorant, **characterized in that** the average surface cell wall thickness of the molded article, determined according to the method as defined in the specification, is 20 µm or more.

2. The expanded thermoplastic polyurethane beads molded article according to claim 1, wherein the variation coefficient of the surface cell wall thickness of the molded article, determined according to the method as defined in the specification, is 0.8 or less.

3. A method for producing an expanded thermoplastic polyurethane beads molded article having an average surface cell wall thickness, determined according to the method as defined in the specification, of 20 µm or more, comprising
(I) subjecting expanded thermoplastic polyurethane beads containing a colorant to in-mold molding to produce an expanded beads molded article, wherein the average surface cell wall thickness of the expanded beads is less than 15 µm, and at the time of in-mold molding, the expanded beads are heated with steam having a temperature of higher than ((melting temperature Tm) · 25)°C and not higher than the (melting temperature Tm)°C of the thermoplastic polyurethane constituting the expanded beads, wherein the melting temperature is determined according to the method as defined in the specification; or
(II) subjecting expanded thermoplastic polyurethane beads containing a colorant to in-mold molding to produce an expanded beads molded article, wherein the average surface cell wall thickness of the expanded beads is 15 µm or more;
wherein the average surface cell wall thickness of the expanded beads is determined according to the method as defined in the specification.

4. The method for producing an expanded thermoplastic polyurethane beads molded article according to claim 3, wherein in (I) the average cell diameter of the expanded beads, determined according to the method as defined in the specification, is 50 µm or more and less than 150 µm.

5. The method for producing an expanded thermoplastic polyurethane beads molded article according to claim 3 or 4, wherein in (I) the melt flow rate at 190°C under a load of 10 kg of the expanded beads, determined according to the method as defined in the specification, is from 5 to 40 g/10 min.

6. The method for producing an expanded thermoplastic polyurethane beads molded article according to claim 3, wherein in (II) the average cell diameter of the expanded beads, determined according to the method as defined in the specification, is 150 µm or more.

7. The method according to any one of claims 3 to 6, wherein in (II) the expanded thermoplastic polyurethane beads containing a colorant are **characterized by** having an apparent density of from 80 to 300 kg/m³, an average cell diameter of from 150 to 400 µm, and an average surface cell wall thickness of 15 µm or more, wherein the apparent density, the average cell diameter and the average surface cell wall thickness are determined according to the methods as defined in the specification.

8. Expanded thermoplastic polyurethane beads that are expanded thermoplastic polyurethane beads containing a colorant, being **characterized by** an apparent density of from 80 to 300 kg/m³, an average cell diameter of from 100 to 400 µm, and an average surface cell wall thickness of 15 µm or more, wherein the apparent density, the average cell diameter and the average surface cell wall thickness are determined according to the methods as defined in the specification.

9. The expanded thermoplastic polyurethane beads according to claim 8, wherein the average cell diameter of the expanded beads, determined according to the method as defined in the specification, is 150 µm or more and 300 µm or less.

10. The expanded thermoplastic polyurethane beads according to claim 8 or 9, wherein the average bead diameter, determined according to the method as defined in the specification, of the expanded beads is from 1 to 8 mm.

11. The expanded thermoplastic polyurethane beads according to any one of claims 8 to 10, wherein the melt flow rate at 190°C under a load of 10 kg of the expanded beads, determined according to the method as defined in the specification, is from 5 to 40 g/10 min.

12. The expanded thermoplastic polyurethane beads according to any one of claims 8 to 11, wherein the colorant is a color pigment, and the content of the color pigment in the expanded beads is from 0.1 to 5% by mass.

13. The expanded thermoplastic polyurethane beads according to any one of claims 8 to 12, wherein the melt flow rate at 190°C under a load of 10 kg of the expanded beads, determined according to the method as defined in the specification, is from 10 to 40 g/10 min.

14. The expanded thermoplastic polyurethane beads according to any one of claims 8 to 13, wherein the thermoplastic polyurethane constituting the expanded beads is an ether-based thermoplastic polyurethane.

15. The expanded thermoplastic polyurethane beads according to claim 14, wherein the melt flow rate at 190°C under a load of 10 kg of the expanded beads, determined according to the method as defined in the specification, is from 20 to 35 g/10 min.

## Patentansprüche

1. Ein Formgegenstand aus expandierten thermoplastischen Polyurethan-Perlen, der ein In-Mold-Formartikel aus expandierten thermoplastischen Polyurethan-Perlen ist, die ein Färbemittel enthalten, **dadurch gekennzeichnet, dass** die durchschnittliche Oberflächenzellwanddicke des Formgegenstand, bestimmt nach dem in der Beschreibung definierten Verfahren, 20 µm oder mehr beträgt.

2. Der Formgegenstand aus expandierten thermoplastischen Polyurethan-Perlen nach Anspruch 1, wobei der Variationskoeffizient der Oberflächenzellwanddicke des Formgegenstands, bestimmt nach dem in der Beschreibung definierten Verfahren, 0,8 oder weniger beträgt.

3. Ein Verfahren zur Herstellung eines Formgegenstands aus expandierten thermoplastischen Polyurethan-Perlen mit einer durchschnittlichen Oberflächenzellwanddicke von 20 µm oder mehr, bestimmt nach dem in der Beschreibung definierten Verfahren, umfassend
(I) Unterziehen von expandierten thermoplastischen Polyurethan-Perlen, die ein Färbemittel enthalten, In-Mold-Formgebung, um einen Formgegenstand aus expandierten Perlen herzustellen, wobei die durchschnittliche Oberflächenzellwanddicke der expandierten Perlen weniger als 15 µm beträgt, und zum Zeitpunkt In-Mold-Formgebung die expandierten Perlen mit Dampf erhitzt werden, der eine Temperatur von höher als ((Schmelztemperatur Tm) - 25)°C und nicht höher als die (Schmelztemperatur Tm)°C des thermoplastischen Polyurethans aufweist, aus dem die expandierten Perlen bestehen, wobei die Schmelztemperatur gemäß dem in der Beschreibung definierten Verfahren bestimmt wird; oder
(II) Unterziehen von expandierten thermoplastischen Polyurethan-Perlen, die ein Färbemittel enthalten, einem In-Mold-Formgebung, um einen Formartikel aus expandierten Perlen herzustellen, wobei die durchschnittliche Oberflächenzellwanddicke der expandierten Perlen 15 µm oder mehr beträgt;
wobei die durchschnittliche Oberflächenzellwanddicke der expandierten Perlen gemäß dem in der Beschreibung definierten Verfahren bestimmt wird.

4. Das Verfahren zur Herstellung eines Formkörpers aus expandierten thermoplastischen Polyurethan-Perlen nach Anspruch 3, wobei in (I) der durchschnittliche Zelldurchmesser der expandierten Perlen, bestimmt nach dem in der Beschreibung definierten Verfahren, 50 µm oder mehr und weniger als 150 µm beträgt.

5. Das Verfahren zur Herstellung eines Formkörpers aus expandierten thermoplastischen Polyurethan-Perlen nach Anspruch 3 oder 4, wobei in (I) die Schmelzflussrate bei 190°C unter einer Last von 10 kg der expandierten Perlen, bestimmt nach dem in der Beschreibung definierten Verfahren, 5 bis 40 g/10 min beträgt.

6. Das Verfahren zur Herstellung eines Formkörpers aus expandierten thermoplastischen Polyurethan-Perlen nach Anspruch 3, wobei in (II) der durchschnittliche Zelldurchmesser der expandierten Perlen, bestimmt nach dem in der Beschreibung definierten Verfahren, 150 µm oder mehr beträgt.

7. Das Verfahren nach einem der Ansprüche 3 bis 6, wobei in (II) die expandierten thermoplastischen Polyurethan-Perlen, die ein Färbemittel enthalten, **dadurch gekennzeichnet sind, dass** sie eine Rohdichte von 80 bis 300 kg/m³, einen durchschnittlichen Zelldurchmesser von 150 bis 400 µm und eine durchschnittliche Oberflächenzellwanddicke von 15 µm oder mehr aufweisen, wobei die Rohdichte, der durchschnittliche Zelldurchmesser und die durchschnittliche Oberflächenzellwanddicke gemäß den in der Beschreibung definierten Verfahren bestimmt werden.

8. Expandierte thermoplastische Polyurethan-Perlen, die expandierte thermoplastische Polyurethan-Perlen sind, die ein Färbemittel enthalten, **gekennzeichnet durch** eine Rohdichte von 80 bis 300 kg/m³, einen durchschnittlichen Zelldurchmesser von 100 bis 400 µm und eine durchschnittliche Oberflächenzellwanddicke von 15 µm oder mehr, wobei die Rohdichte, der durchschnittliche Zelldurchmesser und die durchschnittliche Oberflächenzellwanddicke nach den in der Beschreibung definierten Methoden bestimmt werden.

9. Die expandierten thermoplastischen Polyurethan-Perlen nach Anspruch 8, wobei der durchschnittliche Zelldurchmesser der expandierten Perlen, bestimmt nach dem in der Beschreibung definierten Verfahren, 150 µm oder mehr und 300 µm oder weniger beträgt.

10. Die expandierten thermoplastischen Polyurethan-Perlen nach Anspruch 8 oder 9, wobei der durchschnittliche Perlendurchmesser der expandierten Perlen, bestimmt nach dem in der Beschreibung definierten Verfahren, 1 bis 8 mm beträgt.

11. Die expandierten thermoplastischen Polyurethan-Perlen nach einem der Ansprüche 8 bis 10, wobei die Schmelzflussrate bei 190°C unter einer Last von 10 kg der expandierten Perlen, bestimmt nach dem in der Beschreibung definierten Verfahren, von 5 bis 40 g/10 min beträgt.

12. Die expandierten thermoplastischen Polyurethan-Perlen nach einem der Ansprüche 8 bis 11, wobei das Farbmittel ein Farbpigment ist und der Gehalt des Farbpigments in den expandierten Perlen 0,1 bis 5 Massenprozent beträgt.

13. Die expandierten thermoplastischen Polyurethan-Perlen nach einem der Ansprüche 8 bis 12, wobei die Schmelzflussrate bei 190°C unter einer Last von 10 kg der expandierten Perlen, bestimmt nach dem in der Beschreibung definierten Verfahren, 10 bis 40 g/10 min beträgt.

14. Die expandierten thermoplastischen Polyurethan-Perlen nach einem der Ansprüche 8 bis 13, wobei das thermoplastische Polyurethan, aus dem die expandierten Perlen bestehen, ein thermoplastisches Polyurethan auf Etherbasis ist.

15. Die expandierten thermoplastischen Polyurethan-Perlen nach Anspruch 14, wobei die Schmelzflussrate bei 190 °C unter einer Last von 10 kg der expandierten Perlen, bestimmt nach dem in der Beschreibung definierten Verfahren, 20 bis 35 g/10 min beträgt.

## Revendications

1. Article moulé en billes de polyuréthane thermoplastique expansées qui est un article moulé dans un moule en billes de polyuréthane thermoplastique expansées contenant un colorant, **caractérisé en ce que** l'épaisseur moyenne des parois des cellules de surface de l'article moulé, déterminée conformément au procédé tel que défini dans la description, est de 20 µm ou plus.

2. Article moulé en billes de polyuréthane thermoplastique expansées selon la revendication 1, dans lequel le coefficient de variation de l'épaisseur des parois des cellules de surface de l'article moulé, déterminé conformément au procédé tel que défini dans la description, est de 0,8 ou moins.

3. Procédé de production d'un article moulé en billes de polyuréthane thermoplastique expansées présentant une épaisseur moyenne des parois des cellules de surface, déterminée conformément au procédé tel que défini dans la description, de 20 µm ou plus, comprenant
(I) la soumission de billes de polyuréthane thermoplastique expansées contenant un colorant à un moulage dans un moule pour produire un article moulé en billes expansées, dans lequel l'épaisseur moyenne des parois des cellules de surface des billes expansées est inférieure à 15 µm, et au moment du moulage dans le moule, et les billes expansées sont chauffées avec une vapeur d'eau présentant une température supérieure à ((température de fusion Tm) - 25) °C et non supérieure à la (température de fusion Tm) °C du polyuréthane thermoplastique constituant les billes expansées, dans lequel le température de fusion est déterminée conformément au procédé tel que défini dans la description ; ou
(II) la soumission de billes de polyuréthane thermoplastique expansées contenant un colorant à un moulage dans un moule pour produire un article moulé en billes expansées, dans lequel l'épaisseur moyenne des parois des cellules de surface des billes expansées est de 15 µm ou plus ;
dans lequel l'épaisseur moyenne des parois des cellules de surface des billes expansées est déterminée conformément au procédé tel que défini dans la description.

4. Procédé de production d'un article moulé en billes de polyuréthane thermoplastique expansées selon la revendication 3, dans lequel dans (I) le diamètre moyen des cellules des billes expansées, déterminé conformément au procédé tel que défini dans la description, est de 50 µm ou plus et inférieur à 150 µm.

5. Procédé de production d'un article moulé en billes de polyuréthane thermoplastique expansées selon la revendication 3 ou 4, dans lequel dans (I) un indice de fluidité à l'état fondu à 190 °C sous une charge de 10 kg des billes expansées, déterminé conformément au procédé tel que défini dans la description, est de 5 à 40 g/10 min.

6. Procédé de production d'un article moulé en billes de polyuréthane thermoplastique expansées selon la revendication 3, dans lequel dans (II) le diamètre moyen des cellules des billes expansées, déterminé conformément au procédé tel que défini dans la description, est de 150 µm ou plus.

7. Procédé selon l'une quelconque des revendications 3 à 6, dans lequel dans (II) les billes de polyuréthane thermoplastique expansées contenant un colorant sont **caractérisées en ce qu'**elles présentent une masse volumique apparente de 80 à 300 kg/m³, un diamètre moyen de cellules de 150 à 400 µm, et une épaisseur moyenne des parois des cellules de surface de 15 µm ou plus, dans lequel la masse volumique apparente, le diamètre moyen de cellules et l'épaisseur moyenne des parois des cellules de surface sont déterminés conformément aux procédés tels que définis dans la description.

8. Billes de polyuréthane thermoplastique expansées qui sont des billes de polyuréthane thermoplastique expansées contenant un colorant, **caractérisées par** une masse volumique apparente de 80 à 300 kg/m³, un diamètre moyen de cellules de 100 à 400 µm, et une épaisseur moyenne des parois des cellules de surface de 15 µm ou plus, dans lesquelles la masse volumique apparente, le diamètre moyen de cellules et l'épaisseur moyenne des parois des cellules de surface sont déterminés conformément aux procédés tels que définis dans la description.

9. Billes de polyuréthane thermoplastique expansées selon la revendication 8, dans lesquelles le diamètre moyen des cellules des billes expansées, déterminé conformément au procédé tel que défini dans la description, est de 150 µm ou plus et de 300 µm ou moins.

10. Billes de polyuréthane thermoplastique expansées selon la revendication 8 ou 9, dans lesquelles le diamètre moyen de bille, déterminé conformément au procédé tel que défini dans la description, des billes expansées est de 1 à 8 mm.

11. Billes de polyuréthane thermoplastique expansées selon l'une quelconque des revendications 8 à 10, dans lesquelles l'indice de fluidité à l'état fondu à 190 °C sous une charge de 10 kg des billes expansées, déterminé conformément au procédé tel que défini dans la description, est de 5 à 40 g/10 min.

12. Billes de polyuréthane thermoplastique expansées selon l'une quelconque des revendications 8 à 11, dans lesquelles le colorant est un pigment de couleur, et la teneur en pigment de couleur dans les billes expansées est de 0,1 à 5 % en masse.

13. Billes de polyuréthane thermoplastique expansées selon l'une quelconque des revendications 8 à 12, dans lesquelles l'indice de fluidité à l'état fondu à 190 °C sous une charge de 10 kg des billes expansées, déterminé conformément au procédé tel que défini dans la description, est de 10 à 40 g/10 min.

14. Billes de polyuréthane thermoplastique expansées selon l'une quelconque des revendications 8 à 13, dans lesquelles le polyuréthane thermoplastique constituant les billes expansées est un polyuréthane thermoplastique à base d'éther.

15. Billes de polyuréthane thermoplastique expansées selon la revendication 14, dans lesquelles l'indice de fluidité à l'état fondu à 190 °C sous une charge de 10 kg des billes expansées, déterminé conformément au procédé tel que défini dans la description, est de 20 à 35 g/10 min.
